Europäisches Patentamt

European Patent Office

Office européen des brevets

(11) Veröffentlichungsnummer: **0 161 668 B1**

## EUROPÄISCHE PATENTSCHRIFT

(45) Veröffentlichungstag der Patentschrift: **04.03.92**

(21) Anmeldenummer: **85105918.8**

(22) Anmeldetag: **14.05.85**

(51) Int. Cl.⁵: **G01C 21/12**, G01C 21/00

(54) **Navigationsverfahren für Fahrzeuge insbesondere Landfahrzeuge.**

(30) Priorität: **16.05.84 DE 3418081**

(43) Veröffentlichungstag der Anmeldung:
**21.11.85 Patentblatt 85/47**

(45) Bekanntmachung des Hinweises auf die
Patenterteilung:
**04.03.92 Patentblatt 92/10**

(84) Benannte Vertragsstaaten:
**DE FR GB IT SE**

(56) Entgegenhaltungen:
**EP-A- 0 061 564**
**DE-A- 3 229 819**
**FR-A- 2 424 517**
**US-A- 3 702 477**

**H. SCHRÖPL: "Teldix Taschenbuch der Navigation", August 1979, Seiten 137-142,315-320**

**PROCEEDINGS OF THE IEEE 1980 NATIONAL AEROSPACE AND ELECTRONICS CONFERENCE NAECON 1980, Dayton, 20.-22. Mai 1980, Band 1, Seiten 92-99, IEEE; P.B. REDDY: "Laser gyro strapdown system alignment/calibration and land navigation using Kalman filters"**

**JOURNAL OF GUIDANCE, CONTROL AND DYNAMICS, Band 7, Nr. 2, März/April 1984, Seiten 175-182, American Institute of Aeronautics and Astronautics, Inc., New York, US; W.E. LONGENBAKER: "Terrain-aided navigation of an unpowered tactical missile using autopilot-grade sensors"**

(73) Patentinhaber: **TELDIX GmbH**
**Grenzhöfer Weg 36 Postfach 105608**
**W-6900 Heidelberg 1(DE)**

(72) Erfinder: **Pawelek, Bernd-Christian, Dipl.-Ing.**
**Breslauer Strasse 20**
**W-6908 Wiesloch 1(DE)**

(74) Vertreter: **Wiechmann, Manfred, Dipl.-Ing.**
**ANT Nachrichtentechnik GmbH Patentabteilung Gerberstrasse 33**
**W-7150 Backnang(DE)**

**Beschreibung**

Die Erfindung betrifft ein Navigationsverfahren nach dem Oberbegriff des Hauptanspruchs.

Ein Ortungsverfahren der genannten Art ist aus der DE-PS 30 33 279 bekannt. Das Verfahren wird dabei in einer Fahrzeugnavigationsanlage angewendet, die aus dem von dem Kursreferenzgerät gelieferten, auf ein UTM-Gitterkoordinatensystem bezogenen Kurswinkel und aus den durch Integration der Fahrzeuggeschwindigkeit gewonnenen Wegsignalen die Position des Fahrzeugs in dem Gitterkoordinatensystem bestimmt. Während der Fahrt auftretende Positionsfehler, die nicht im linearen Zusammenhang mit der Fahrstrecke bzw. Fahrzeit liegen, werden dadurch eliminiert, daß zu dem Zeitpunkt, an welchem sich das Fahrzeug an einem bekannten Geländepunkt befindet, ein Vergleich zwischen angezeigten und tatsächlichem Standort vorgenommen, ein Weganpassungsfaktor bestimmt und der Kurswinkel berichtigt wird.

Es hat sich jedoch gezeigt, daß es sinnvoll ist, nicht nur die angezeigte Fahrzeug-Position bei Erreichen eines bekannten Geländepunktes zu korrigieren, sondern quasikontinuierlich bzw. zu bestimmten Zeitpunkten (zeitdiskret) eine Verbesserung aller Anzeigedaten vorzunehmen.

Die Aufgabe der Erfindung besteht daher in der Schaffung eines Navigationsverfahrens, das bei Verwendung einfacher Sensoren eine möglichst hohe und zeitkonstante Genauigkeit aller Fahrzeugnavigationsdaten liefert.

Diese Aufgabe wird gemäß den kennzeichnenden Merkmalen des Hauptanspruchs gelöst. Der wesentliche Vorteil der Erfindung liegt in der Schaffung einer Navigationsanlage, die sowohl von fahrzeugeigenen Sensoren wie Kurs- und Geschwindigkeits- oder Weggeber, als auch von zusätzlichen Eingabemitteln Navigationssignale erhält und mittels des Einsatzes des modifizierten Kalman-Filters optimierte Navigationsdaten bildet. Zusätzliche Eingabemittel sind beispielsweise manuelle Eingaben des Standorts, aber auch Empfangseinrichtungen für Funk- und/oder Satellitennavigationsverfahren, die beispielsweise unter den Namen "Transit" oder "GPS-Navstar" bekannt sind (Siehe hierzu DE-OS 28 43 812).

Aus dem TELDIX Taschenbuch der Navigation 1979, insbesondere Seite 138, der DE-A-3 32 29 819 und der US-A-3 702 477 ist es bekannt, Kalman-Filter bei Navigationsverfahren einzusetzen. Diesen Literaturstellen konnte der Fachmann jedoch nicht die im Kennzeichen des Anspruches 1 angegebenen Merkmale entnehmen bzw. zu einer derartigen Ausbildung angeregt werden.

In einer Weiterbildung der Erfindung wird vorgeschlagen, auch Kurs- und/oder Fahrzeuglängsbewegungsstützungsdaten aus den Signalen einer Funk- und/oder Satellitennavigationsanlage zu bilden und diese mit den verbesserten Signalen des Kursreferenzgerätes und/oder den Signalen des Fahrzeuglängsbewegungssensors zu vergleichen. Die Vergleichsdaten werden dann ebenfalls dem Modellbildungsblock für das Fehlverhalten und dem Kalman-Filter zugeführt.

In einer weiteren Ausgestaltung der Erfindung wird vorgeschlagen, zusätzlich zu der Kompensation der deterministischen Kurs- und Geschwindigkeitsfehler sowie der stochastischen Kursfehlerkomponenten auch eine Korrektur der stochastischen Fahrzeuglängsbewegungsfehleranteile vorzunehmen, wozu dann mittels der Kalman-Filter-Längsbewegungsfehlerabschätzung entsprechende Korrekturwerte gebildet und den Fahrzeuglängsbewegungssignalen zusätzlich aufgeschaltet werden.

Die Erfindung wird anhand von Ausführungsbeispielen näher erläutert.

Es zeigen

Fig. 1      das Blockschaltbild eines Navigationssystems mit Kalman-Filter

Fig. 2      ein Zeitablaufdiagramm für die einzelnen Verfahrensschritte

Fig. 3      Darstellung eines Koppelortes.

Fig. 4      Das Blockschaltbild eines einfachen Navigationssystems mit Kalman-Filter bei Anwendung von lediglich manuellen Positionseingaben.

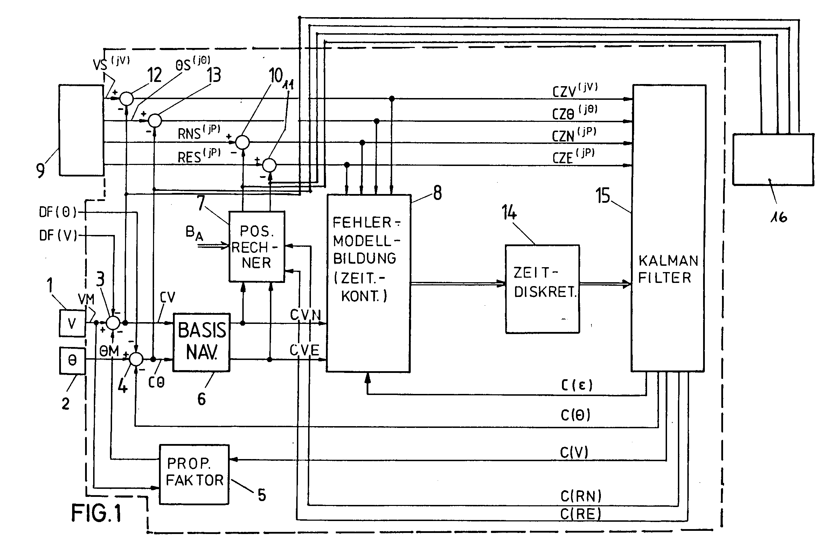

Das Blockschaltbild in Fig. 1 zeigt ein Navigationssystem wie es beispielsweise in Landfahrzeugen zur Anwendung kommt. Zur Sensierung der Fahrzeuglängsbewegung ist ein Geschwindigkeitssensor 1 und ein Richtungsmesser 2, beispielsweise ein Kurskreisel vorgesehen. Die von den Sensoren 1, 2 gelieferten, auf Plausibilität (z. B. Kurs- und Geschwindigkeitsänderungs- sowie Maximalwertabfragen, aber auch statistische Diagnoserechenkonzepte wie z. B. Mittelwert- und Varianzschätzungen) überprüften Meßwerte (VM) für Geschwindigkeit und für Kurs ($\theta$M) sind fehlerbehaftete Werte. Fehler stellen insbesondere scheinbare Drift, Zufallsdrift, Radschlupf und ähnliches dar. Den Meßwerten werden deshalb an den Verknüpfungspunkten 3, 4 die deterministischen Fehleranteile (DF(V)); (DF($\theta$)) zugeführt. Ferner werden an diesen Verknüpfungspunkten die von dem weiter unten näher beschriebenen Kalman-Filter gelieferten Korrekturgrößen (C-($\theta$)) und (C(V)) aufgeschaltet, wobei (C(V)) über einen Proportionalitäts-Faktor (Block 5) den aktuellen Geschwindigkeits-Meßwerten des Geschwindigkeitssensors angepaßt wird.

Die so korrigierten Signale für die Geschwindigkeit und Kurs gelangen zu einer Basis-Navigationseinheit (Block 6), die die Geschwindigkeit in Komponenten für Nord- und Ostrichtung bildet und diese dem Positionsrechner (Block 7) und einem Modellbildungsblock (8) für das Fehlerverhalten zuführt.

Der Positionsrechner ermittelt aufgrund von Anfangsbedingungen ($B_A$) wie ursprünglicher Standort, Anfangsausrichtung des Kurskreisels und des Fahrzeugs, Startzeitpunkt, Anfangsgeschwindigkeit usw, den Koppelnavigationsort in Nord- und Ostrichtung. Erreicht das Fahrzeug einen Geländepunkt dessen Koordinaten bekannt sind, beispielsweise einen bestimmten geodätischen Punkt, dann werden dessen Koordinaten über eine Eingabeeinheit (Block 9) dem Navigationssystem eingegeben und mit den Nord- und Ostwerten der Koppelposition verglichen (Verknüpfungspunkte 10, 11).

Die genannte Eingabeeinheit dient außerdem als Darstellungsmittel für eventuell im Fahrzeug vorhandene Funk- und/oder Satellitennavigationseinrichtungen, welche sowohl die aktuellen, ebenfalls auf Plausibilität zu überprüfenden Fahrzeug-Positions-, als auch die entsprechenden -Kurs- und/oder -Geschwindigkeitsinformationen liefern können. In diesem Fall werden dann zusätzlich nicht nur die Positionssignale der Funk- und/oder Satellitennavigationsanlagen mit der Koppelposition verglichen, sondern es erfolgen darüberhinaus auch Vergleiche der entsprechenden Kurs- und/oder Geschwindigkeitssignale mit den korrigierten Signalen vom Richtungsmesser und/oder Geschwindigkeitsgeber (Verknüpfungspunkte 12, 13). Die eventuell vorhandenen Positionsabweichungen in den beiden Koordinatenrichtungen ($CZN^{(iP)}$), ($CZE^{(iP)}$) sowie die Kurs- und/ oder Geschwindigkeitsdifferenzen ($CZ\theta^{(iP)}$) und/oder ($CZV^{(iV)}$) werden dem Modellbildungsblock für das Fehlerverhalten (8) sowie dem Kalman-Filter (Block 15) zugeführt.

Dieses liefert zusätzlich zu den bereits erwähnten Richtungs- und Geschwindigkeitskorrekturgrößen ($C(\theta)$) und ($C(V)$) auch Richtungsänderungskorrekturen $C(\epsilon)$, die dem Modellbildungsblock für das Fehlerverhalten (8) zugeführt werden, sowie Positionskorrekturwerte in Nord- und Ostrichtung ($C(RN)$) und ($C(RE)$), die dem Positionsrechner zur Korrektur der Koppelortdaten zusätzlich aufgeschaltet werden.

Das Kalman-Filter dient zur Abschätzung der gesamten modellierten Navigationsfehler.

Die so extrapolierten Navigationsfehler werden zur Berechnung der oben genannten Korrekturgrößen verwendet, die zur Fehlerkompensation in das Navigationssystem zurückgeführt werden. Das damit konzipierte System im geschlossenen Regelkreis liefert dann automatisch die "optimal" verbesserten Navigationsgrößen, die über die Anzeigemittel (Block 16) angezeigt werden können.

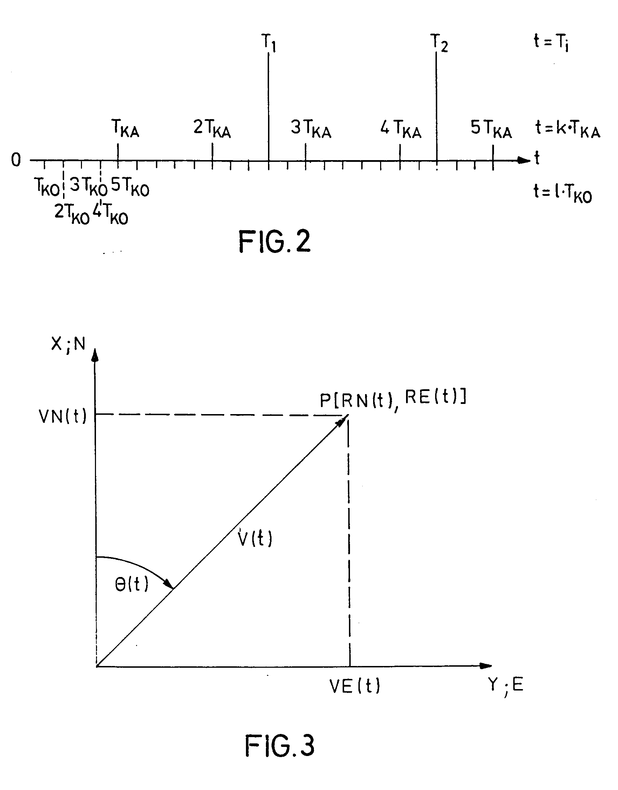

Ausgangspunkt ist das sogenannte Basisnavigationssystem, das aus der Kurswinkel- (Kurskreisel) sowie der Geschwindigkeitsmeßeinrichtung besteht. Für den Fall "Navigation in der Ebene" lauten die physikalischen Basisnavigationsgleichungen - Koppelnavigation aus Fahrzeuggeschwindigkeit V(t) und Kurswinkel $\theta$-(t) -, wie in Fig. 3 dargestellt:

$$RN(t) = \int_{t_0}^{t} VN(t)dt = \int_{t_0}^{t} V(t) \cdot \cos\theta(t)\, dt \qquad (1)$$

$$RE(t) = \int_{t_0}^{t} VE(t)dt = \int_{t_0}^{t} V(t) \cdot \sin\theta(t)\, dt \qquad (2)$$

mit

$$\left.\begin{array}{l} RN(t)\} \\ RE(t)\} \end{array}\right\} : \text{Fahrzeugposition in Nord-(N-) und Ost-(E) Richtung}$$

$$\left.\begin{array}{l} VN(t)\} \\ VE(t)\} \end{array}\right\} : \text{Fahrzeuggeschwindigkeit in Nord-(N-) und Ost-(E-) Richtung}$$

$$t \quad : \quad \text{Zeit}$$

Wie schon erwähnt, ergeben sich aufgrund der Fehler von Kurs- und Geschwindigkeitsmeßeinrichtung nach Durchführung der Koppelrechnung entsprechend Gl. (1) und (2) falsche Fahrzeugpositionswerte, welche durch die Navigationsdaten- Stützungen - es wird angenommen, daß auch diese Fehler aufweisen - verbessert werden.

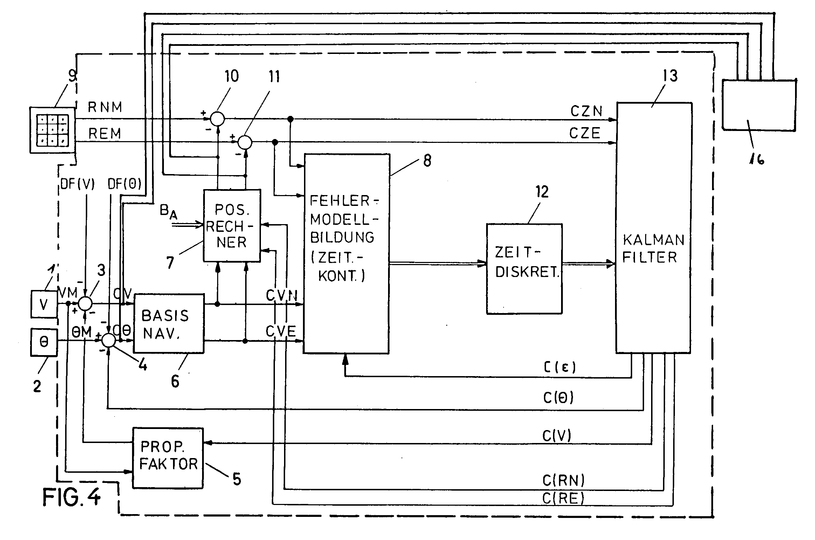

Nachfolgend erfolgt die Formulierung der Modellbildungs- und Kalman-Filter-Algorithmen zunächst für den Fall, daß lediglich von Zeit zu Zeit Positionsdaten manuell eingegeben werden. Siehe hierzu die Fig. 4.

Für die einzelnen Meßgrößen gelten dann folgende Modellannahmen:

• Gemessenes auf Plausibilität überprüftes Fahrzeuggeschwindigkeissignal VM(t) vom Geschwindigkeitsgeber:

$$VM(t) = V(t) + \Delta V(t) \qquad (3)$$

mit

$\quad V(t) \qquad$ : fehlerfreie Fahrzeuggeschwindigkeit
$\quad \Delta V(t) \qquad$ : Geschwindigkeitsfehler

• Gemessenes auf Plausibilität überprüftes Kurswinkelsignal $\theta M(t)$ vom Richtungsmesser:

$$\theta M(t) = \theta(t) + \Delta \theta(t) \qquad (4)$$

mit

$\quad \theta(t) \qquad$ : fehlerfreier Kurswinkel
$\quad \Delta \theta(t) \qquad$ : Kurswinkelfehler

• Gemessene Fahrzeugposition (Positionsfixe) RNS(t), RES(t):

$$RNS(t) = RN(t) + \Delta RNS(t) \qquad (5)$$

$$RES(t) = RE(t) + \Delta RES(t) \qquad (6)$$

mit

$$\left. \begin{array}{l} RN(t) \\ RE(t) \end{array} \right\} : \quad \text{fehlerfreie Fahrzeugposition in Nord-(N-) und Ost-(E-) Richtung}$$

$$\left. \begin{array}{l} \Delta RNS(t) \\ \Delta RES(t) \end{array} \right\} : \quad \text{Positionsmeß- (Stützungs-) Fehler in Nord-(N-) und Ost-(E) Richtung}$$

Mit den Gl. (1), (2), (3) und (4) ergibt sich für das "reale" Basisnavigationssystem = zeitkontinuierliche Systemgleichungen:

$$\dot{RN}^{FOA}(t) = VNM(t) = VM(t) \cdot \cos \theta M(t) \qquad (7a)$$

$$\dot{RE}^{FOA}(t) = VEM(t) = VM(t) \cdot \sin \theta M(t) \qquad (7b)$$

mit

4

$$RN^{FOA}(t) \Big\} : \text{Mittels Koppelrechnung aus den gemessenen}$$
$$RE^{FOA}(t) \Big\} \quad \text{Basisnavigationsgrößen ermittelte fehlerhafte}$$

Positionskoordinaten der Fahrzeugnavigations-/
-orientierungsanlage (FOA)

Die zeitkontinuierlichen Meß-(Stützungs-) Gleichungen erhält man durch Vergleich des sich nach Durchführung der Koppelrechnung ergebenden Orts $(RN^{FOA}(t), RE^{FOA}(t))$ mit der gemessenen (Positionsfixe) Fahrzeugposition $(RNS(t), RES(t))$. Dies bedeutet:

$$ZN(t) = RNS(t) - RN^{FOA}(t) \qquad (8a)$$

$$ZE(t) = RES(t) - RE^{FOA}(t) \qquad (8b)$$

mit

$$ZN(t) \Big\} = \text{Differenz zwischen Koppel- und Stützposition in}$$
$$ZE(t) \Big\} \quad \text{Nord-(N-) und Ost-(E-) Richtung.}$$

Zeitkontinuierliche Fehlergleichungen

Die Anwendung des Fehlerfortpflanzungsgesetzes auf die Gl. (7a/7b) sowie (8a/8b) liefert folgende Fehlergleichungen:

● Fehler des Basisnavigationssystems → Systemfehler:

$$\Delta \dot{RN}(t) \Big\} = \cos \Theta M(t) \cdot \Delta V(t) - VEM(t) \cdot \Delta \Theta(t) \qquad (9a)$$
$$\Delta \dot{RE}(t) \Big\} = \sin \Theta M(t) \cdot \Delta V(t) + VNM(t) \cdot \Delta \Theta(t) \qquad (9b)$$

mit

$$\Delta RN(t) \Big\} : \text{Positionsfehler nach Koppelrechnung}$$
$$\Delta RE(t) \Big\}$$

● Fehler infolge Positionsstützungen (-Fixe) → Meßfehler:

$$\Delta ZN(t) = \Delta RNS(t) - \Delta RN(t) = ZN(t) \qquad (10a)$$

$$\Delta ZE(t) = \Delta RES(t) - \Delta RE(t) = ZE(t) \qquad (10b)$$

mit

$$\Delta ZN(t) \Big\} : \text{Positionsfehlerdifferenzen in Nord- (N-) und}$$
$$\Delta ZE(t) \Big\} \quad \text{Ost- (E-) Richtung}$$

wobei die einzelnen Fehler wie folgt modelliert werden:

● Geschwindigkeitsfehlermodellierung

Mit der Annahme, daß der (stochastische) Geschwindigkeitsfehler durch eine Summe von (zeit-) korreliertem, d.h. farbigem Rauschen (beschreibbar durch GAUSS-MARKOV-Prozesse 1. Ordnung) und GAUSS'schem WEISSEM, d.h. (zeit-) unkorreliertem Rauschen modellierbar ist, ergibt sich:

$$\Delta V(t) = \Delta V_1(t) + \Delta V_2(t) \qquad (11)$$

mit

$$\Delta \dot{V}_1(t) = -\beta_{V1}(t) \cdot \Delta V_1(t) + W_{V1}(t)$$ : Formfilterbeschreibung für den Fehleranteil GAUSS-MARKOV-Prozess 1. Ordnung.

$\beta_{V1}$ : Reziproke Autokorrelations-zeit des Formfilters

$$\Delta V_1(0) \sim N[0; E(\Delta V_1{}^2(0)) = \sigma_{V1}{}^2]$$ : Abgekürzte Schreibweise für den Anfangswert $\Delta V_1(0)$ des GAUSS-MARKOV-Fehleran-teils mit Normal-(N-) Ver-teilung, Anfangsmittelwert 0 und Anfangsvarianz $\sigma_{V1}{}^2(0) = \sigma_{V1}{}^2$

$$W_{V1}(t) =$$
$$q_{V1} \cdot W(t) \sim N[0; E(W_{V1}{}^2(t)) = q_{V1}{}^2]$$ : Abgekürzte Schreibweise für das das Formfilter treibende stationäre WEISSE Rauschen mit Normal- (N-) Verteilung, Mittelwert 0 und spektraler Leistungs-dichte $q_{V1}{}^2$

$$\Delta V_2(t) \sim N[0; E(\Delta V_2{}^2(t)) = q_{V2}{}^2]$$ : Abgekürzte Schreibweise für den Fehleranteil stationäres WEISSES Rauschen mit Normal- (N-) Verteilung, Mittelwert 0 und spektraler Leistungsdichte $q_{V2}{}^2$

$$E(\Delta V_1(t) \cdot \Delta V_2(t)) =$$
$$E(W_{V1}(t) \cdot \Delta V_2(t)) = 0 \qquad : \text{Abgekürzte Schreibweise}$$

für die Annahme, daß $\Delta V_1(t)$ und $\Delta V_2(t)$ untereinander unkorreliert sind.

• Kurswinkelfehlermodellierung

Für die Modellbildung des (stochastischen) Kurswinkelfehlers wird angenommen, daß dieser sich additiv aus einem Anteil exponentiell (zeit-) korrelierten (farbigen) Rauschens $\Delta\theta_1(t)$, aus einem zeitlich linear veränderlichen Anteil $\Delta\theta_2(t)$ (Driftwinkel) mit unbekanntem Anfangswert $\Delta\theta_2(O)$ und unbekannter Steigung $\epsilon$-(t) (RANDOM RAMP-Prozess) sowie aus einem Anteil GAUSS'schen WEISSEN; d.h. (zeit-) unkorrelierten Rauschens $\Delta\theta_3(t)$ zusammensetzt. Dabei läßt sich der Fehleranteil $\Delta\theta_1(t)$ wiederum durch das mit WEISSEM Rauschen erregte Formfilter GAUSS-MARKOV-Prozess 1. Ordnung beschreiben. Insgesamt erhält man dann folgendes Kurswinkelfehlermodell:

$$\Delta\theta(t) = \Delta\theta_1(t) + \Delta\theta_2(t) + \Delta\theta_3(t) \qquad (12)$$

mit

$$\dot{\Delta\theta}_1(t) = -\beta_{\Theta1} \cdot \Delta\theta_1(t) + W_{\Theta1}(t): \text{ Formfilterbeschreibung für den}$$

Fehleranteil GAUSS-MARKOV-Prozess 1. Ordnung

$$\beta_{\Theta1} : \text{ Reziproke Autokorrelationszeit}$$

des Formfilters.

$$\Delta\theta_1(0) \sim N\left[0; E(\Delta\Theta_1{}^2(0)) = \sigma_{\Theta1}{}^2\right] : \text{ Abgekürzte Schreibweise für}$$

den Anfangswert $\Delta\theta_1(0)$ des GAUSS-MARKOV-Fehleranteils mit Normal- (N-) Verteilung, Anfangsmittelwert O und Anfangsvarianz $\sigma_{\Theta1}{}^2(0) = \sigma_{\Theta1}{}^2$

$$W_{\Theta1}(t) =$$

$$q_{\Theta1} \cdot W(t) \sim N[0; E(W_{\Theta1}^2(t))=q_{\Theta1}^2] : \text{Abgekürzte Schreibweise für}$$

das das Formfilter treibende stationäre WEISSE Rauschen mit Normal- (N-) Verteilung, Mittelwert 0 und spektraler Leistungsdichte $q_{\Theta1}^2$

$$\dot{\Delta\Theta}_2(t) = \varepsilon(t) \qquad : \text{Mathematisches Modell für den}$$

$$\dot{\varepsilon}(t) = 0 \qquad \text{Fehleranteil RANDOM-RAMP-Prozess}$$

$$\Delta\Theta_2(0) \sim N[0; E(\Delta\Theta_2^2(0)) = \sigma_{\Theta2}^2] : \text{Abgekürzte Schreibweise für}$$

$$\varepsilon(0) \sim N[0; E(\varepsilon^2(0)) = \sigma_\varepsilon^2] \qquad \text{die Anfangswerte } \Delta\Theta_2(0) \text{ und}$$

$\varepsilon(0)$ des RANDOM-RAMP-Fehleranteils mit Normal- (N-) Verteilungen, Anfangsmittelwerten 0 sowie Anfangsvarianzen $\sigma_{\Theta2}^2(0) = \sigma_{\Theta2}^2$ und $\sigma_\varepsilon^2(0) = \sigma_\varepsilon^2$.

$$\Delta\Theta_3(t) \sim N[0; E(\Delta\Theta_3^2(t)) = q_{\Theta3}^2] : \text{Abgekürzte Schreibweise für}$$

den Fehleranteil stationäres WEISSES Rauschen mit Normal- (N-) Verteilung, Mittelwert 0 und spektraler Leistungsdichte $q_{\Theta3}^2$.

$$E(\Delta\Theta_1(t) \cdot \Delta\Theta_2(t)) = E(\Delta\Theta_1(t) \cdot \Delta\Theta_3(t))$$

$$= E(\Delta\Theta_2(t) \cdot \Delta\Theta_3(t)) = 0:$$

$$E(W_{\Theta1}(t) \cdot \Delta\Theta_2(t)) = E(W_{\Theta1}(t) \cdot \Delta\Theta_3(t))$$

$$= 0$$

: Abgekürzte Schreibweise für die Annahmen, daß $\Delta\Theta_1(t)$, $\Delta\Theta_2(t)$ $[\varepsilon(t)]$ und $\Delta\Theta_3(t)$ untereinander unkorreliert sind.

● Positionsfehlermodellierung

Die mathematische Modellierung der bei den Positionsfixen (-Stützungen) auftretenden Fehler erfolgt unter der Annahme, daß diese sich durch GAUSS'sches WEISSES, d.h. normalverteiltes unkorreliertes Rauschen beschreiben lassen. Damit ergibt sich für das Positionsfehlermodell in Vektordarstellung:

$$\underline{\Delta RS}(t) = \begin{bmatrix} \Delta RNS(t) \\ \Delta RES(t) \end{bmatrix} = \begin{bmatrix} \Delta RNS^{WR}(t) \\ \Delta RES^{WR}(t) \end{bmatrix} = \underline{\Delta RS}^{WR}(t) \qquad (13)$$

mit

$$\underline{\Delta RS}^{WR}(t) \sim N[\underline{O}; V(t)]$$

und

$$V(t) = V = E(\underline{\Delta RS}^{WR}(t) \bullet (\underline{\Delta RS}^{WR}(t))^T) = \begin{bmatrix} \sigma_N^2 & 0 \\ 0 & \sigma_E^2 \end{bmatrix} :$$

Vektor der Positionsfehleranteile ($\Delta RNS^{WR}(t)$, $\Delta RES^{WR}(t)$), die jeweils durch stationäres WEISSES Rauschen mit Normal(N-) Verteilung, abgekürzt dargestellt durch den Mittelwertvektor $\underline{O}$ sowie die Kovarianz bzw. Spektraldichtematrix V mit den Einzelvarianzen $\sigma_N^2$ und $\sigma_E^2$ nachgebildet werden.

$$(\ldots)^T \qquad : \text{Transponierte eines Vektors oder einer Matrix}$$

Durch Einsetzen der Gl. (11) bis (13) in die Gl. (9) und (10) erhält man das folgende, das gesamte Fehlerverhalten des vorliegenden Navigationssystems beschreibende Gleichungssystem:

● Zeitkontinuierliche Systemfehler-Gleichungen:

$$\dot{\Delta RN}(t) = \cos\Theta M(t) \bullet \Delta V_1(t) - VEM(t) \bullet \Delta\Theta_1(t) - VEM(t) \bullet \Delta\Theta_2(t) +$$
$$\cos\Theta M(t) \bullet \Delta V_2(t) - VEM(t) \bullet \Delta\Theta_3(t) \qquad (14a)$$

$$\dot{\Delta RE}(t) = \sin\Theta M(t) \bullet \Delta V_1(t) + VNM(t) \bullet \Delta\Theta_1(t) + VNM(t) \bullet \Delta\Theta_2(t) +$$
$$\sin\Theta M(t) \bullet \Delta V_2(t) + VNM(t) \bullet \Delta\Theta_3(t) \qquad (14b)$$

$$\dot{\Delta V}_1(t) = -\beta_{V1} \bullet \Delta V_1(t) + W_{V1}(t) \qquad (14c)$$

$$\Delta\dot{\theta}_1(t) = -\beta_{\theta 1} \cdot \Delta\theta_1(t) + W_{\theta 1}(t) \qquad (14d)$$

$$\Delta\dot{\theta}_2(t) = \epsilon(t) \qquad (14e)$$

$$\dot{\epsilon}(t) = O \qquad (14f)$$

- Zeitkontinuierliche Meß- (Stützungs-) Fehlergleichungen:

$$\Delta ZN(t) = -\Delta RN(t) + \Delta RNS^{WR}(t) \qquad (15a)$$

$$\Delta ZE(t) = -\Delta RE(t) + \Delta RES^{WR}(t) \qquad (15b)$$

Die für den Entwurf eines Kalman-Filters geeignete Zustandsraumdarstellung der obigen Gl. ergibt sich nach Einführung von

- Zustandsvektor:

$$\Delta \underline{X}(t) = (\Delta RN(t), \Delta RE(t); \Delta V_1(t); \Delta\theta_1(t), \Delta\theta_2(t), \epsilon(t))^T \qquad (16)$$

- Systemrauschvektor:

$$\underline{\overline{W}}(t) = (\Delta V_2(t); \Delta\Theta_3(t); W_{V1}(t); W_{\theta 1}(t))^T \qquad (17)$$

- Meß- (Stützungs-) Vektor:

$$\Delta \underline{Z}(t) = (\Delta ZN(t), \Delta ZE(t))^T \qquad (18)$$

- Meß- (Stützungs-) Rauschvektor:

$$\underline{V}(t) = \Delta \underline{RS}^{WR}(t) = (\Delta RNS^{WR}(t), \Delta RES^{WR}(t))^T \qquad (19)$$

zu

$$\left.\begin{array}{l} \Delta\underline{\dot{X}}(t) = A(t) \cdot \Delta\underline{X}(t) + \underline{W}(t) \\[2ex] \underline{W}(t) = D(t) \cdot \underline{\overline{W}}(t) \\[2ex] \Delta\underline{X}(t=0) = \Delta\underline{X}_0 \end{array}\right\} : \text{Systemfehlergleichung} \qquad (20)$$

$$\Delta\underline{Z}(t) = M(t) \cdot \Delta\underline{X}(t) + \underline{V}(t) \qquad : \text{Meß- (Stützungs-)} \qquad (21)$$
$$\text{Fehlergleichung}$$

- Systemmatrix A(t):

11

$$A(t) = \begin{bmatrix} 0 & 0 & \cos\Theta M(t) & -VEM(t) & -VEM(t) & 0 \\ 0 & 0 & \sin\Theta M(t) & +VNM(t) & +VNM(t) & 0 \\ 0 & 0 & -\beta_{V1} & 0 & 0 & 0 \\ 0 & 0 & 0 & -\beta_{\Theta 1} & 0 & 0 \\ 0 & 0 & 0 & 0 & 0 & 1 \\ 0 & 0 & 0 & 0 & 0 & 0 \end{bmatrix} \quad (22)$$

• Systemrauscheingangsmatrix D(t):

$$D(t) = \begin{bmatrix} \cos\Theta M(t) & -VEM(t) & 0 & 0 \\ \sin\Theta M(t) & +VNM(t) & 0 & 0 \\ 0 & 0 & 1 & 0 \\ 0 & 0 & 0 & 1 \\ 0 & 0 & 0 & 0 \\ 0 & 0 & 0 & 0 \end{bmatrix} \quad (23)$$

• Meß- (Stützungs-) Matrix M(t):

$$M(t) = M = \begin{bmatrix} -1 & 0 & 0 & 0 & 0 & 0 \\ 0 & -1 & 0 & 0 & 0 & 0 \end{bmatrix} \quad (24)$$

• Systemrauschmatrix Q(t):

$$Q(t) = E(\underline{W}(t)\cdot\underline{W}^T(t)) = D(t)\cdot E(\underline{\overline{W}}(t)\cdot\underline{\overline{W}}^T(t))\cdot D^T(t)$$
$$= D(t)\cdot\overline{Q}(t)\cdot D^T(t)$$

wobei

$$\overline{Q}(t) = \overline{Q} = \begin{bmatrix} q_{V2}^2 & 0 & 0 & 0 \\ 0 & q_{\Theta 3}^2 & 0 & 0 \\ 0 & 0 & q_{V1}^2 & 0 \\ 0 & 0 & 0 & q_{\Theta 1}^2 \end{bmatrix} \quad (25)$$

$$E(\underline{W}(t)) = D(t)\cdot E(\underline{\overline{W}}(t)) = \underline{0}$$

● Meß- (Stützungs-) Rauschmatrix V(t):

$$V(t) = E(\underline{V}(t) \bullet \underline{V}^T(t))$$

wobei

$$V(t) = V = \begin{bmatrix} \sigma_N{}^2 & 0 \\ 0 & \sigma_E{}^2 \end{bmatrix} \qquad (26)$$

und

$$E(\underline{V}(t)) = \underline{O} \ .$$

● Unkorreliertes System- und Meßrauschen:

$$E(\underline{W}(t) \bullet \underline{V}^T(t)) = D(t) \bullet E(\overline{\underline{W}}(t) \bullet \underline{V}^T(t)) \ =$$

$$E(\underline{V}(t) \bullet \underline{W}^T(t)) = E(\underline{V}(t) \bullet \overline{\underline{W}}^T(t)) \bullet D^T(t) \ = 0 \qquad (27)$$

## Zeitdiskretisierung

Soll das vorliegende Navigationssystem mit Hilfe eines Digitalrechners - insbesondere Mikrorechners, z. B. als festprogrammiertes 2- bzw. 3- (bei Integration von GPS-Navstar) Mikroprozessorsystem mit MOTO-ROLA MC 68000-Prozessoren - realisiert bzw. simuliert werden, müssen die zeitkontinuierlichen System- und Meßfehler-(differential-) Gleichungen (14) und (15) bzw. (16) bis (27) - die Positionsfixe (-Stützungen) erfolgen ohnehin zu diskreten Zeitpunkten - in zeitdiskrete Differenzengleichungen übergeführt werden.

Die in Fig. 2 dargestellte "Zeitachse" soll den Zusammenhang zwischen kontinuierlicher Zeit t, den für die Durchführung von Koppel- und Kalman-Filter-Rechnung benötigten Verarbeitungszeiten sowie den Zeitpunkten, zu denen Positionsfixe (-Stützungen) erfolgen, verdeutlichen.

Dabei bedeuten:

$T_{KO}$ : Koppelzyklusdauer; innerhalb dieser wird einmalig die Koppelrechnung durchgeführt

$T_{KA}$ : Kalman-Zyklusdauer; innerhalb dieser erfolgt die einmalige Durchführung der Kalman-Filter-Rechnung

$T_i$ : Zeitpunkte der Positionsfixe (-Stützungen), $i = 1, 2, 3, \ldots$

$$t = l \bullet T_{KO} = k \bullet T_{KA} = T_i \qquad (28)$$

mit

$l$ : Anzahl der Koppelzyklen; $l = 0, 1, 2, 3, \ldots,$

$k$ : Anzahl der Kalman-Zyklen; $k = 0, 1, 2, 3, \ldots$ .

## Zeitdiskrete Systemgleichungen

Der Übergang vom zeitkontinuierlichen zum zeitdiskreten System erfolgt über die Bestimmung der sogenannten Transitionsmatrix. Hierfür wird als Berechnungsmethode der abgebrochene Reihenansatz vorgeschlagen.

Mit der Annahme, daß die zeitkontinuierliche Systemmatrix A(t) konstant ist während eines Kalman-Intervalls $T_{KA} = (t_k - t_{k-1})$ sowie, daß man $T_{KA}$ genügend klein wählen kann, ergibt sich für die Transitions-matrix innerhalb des Zeitintervalls

$(t_k = kT_{KA}, t_{k-1} = (k-1)T_{KA})$:

$$\Phi \left[ kT_{KA}, (k-1)T_{KA} \right] = \Phi_{k,k-1} = \exp \ (A(t_K) \cdot T_{KA}) \approx$$

$$\approx I + A(t_K) \cdot T_{KA} \quad (+ \frac{A^2(t_K)}{2} \cdot T_{KA}^2 + \dots) \quad (29)$$

mit

$k = 1, 2, 3, \dots,$

$A(t_K)$: Systemmatrix zum Zeitpunkt $t_k = k \cdot T_{KA}$ ,

$I$ : Einheitsmatrix .

Da oft die rechentechnisch zweckmäßige Kalman-Zyklusdauer $T_{KA}$ für die obige Annahme $A_{k,k-1}$ = konst.; $k = 1, 2, 3, \dots$ zu groß ausfällt, wird $T_{KA}$ in

$$q = \frac{T_{KA}}{T_{KO}} = gzV > 1, \quad (30)$$

mit

gzV : ganzzahlige Vielfache

gleiche Streifen (dafür bietet sich die Koppelzyklusdauer $T_{KO}$ an) $T_{KO} = (t_l - t_{l-1})$ unterteilt und man kann ansetzen

$$\Phi_{k,k-1} = \Phi \left[ kqT_{KO}; (k-1)qT_{KO} \right] = \prod_{l=kq}^{(k-1)q+1} \Phi_{l,l-1} \quad (31)$$

mit

$$\Phi_{l,l-1} = \exp \ (A(t_l) \cdot T_{KO}) \approx I + A(t_l) \cdot T_{KO} +$$

$$(+ \frac{A^2(t_l)}{2} \cdot T_{KO}^2 + \dots) \quad (32)$$

$$l = 1, 2, 3, \dots$$

entsprechend Gl. (29) und

$A(t_l)$ : Systemmatrix zum Zeitpunkt $t_l = lT_{KO}$ .

Damit geht die zeitkontinuierliche Systemfehlergleichung (20) über in die zeitdiskrete Form

$$\underline{\Delta X}_k = \Phi_{k,k-1} \cdot \underline{\Delta X}_{k-1} + \underline{W}_{k-1},$$

$$\underline{\Delta X}_0 \quad : \ geg. \quad (33)$$

mit dem zeitdiskreten Systemrauschvektor

$$\underline{W}_{k-1} = \int_{t_{k-1}}^{t_k} \Phi[t_k, \tau] \cdot D(\tau) \cdot \underline{\overline{W}}(\tau) \, d\tau,$$

$$k = 1, 2, 3, \ldots \tag{34}$$

und

$$D(\tau), \underline{\overline{W}}(\tau) \text{ nach Gl. (23) und (17).}$$

Entsprechend der Vorgehensweise bei der Bestimmung des zeitdiskreten Systemrauschvektors nach Gl. (34) erhält man für die zeitdiskrete Systemrauschmatrix

$$Q_{k-1} = E\left(\underline{W}_{k-1} \cdot \underline{W}_{k-1}^T\right)$$

$$= \int_{t_{k-1}}^{t_k} \Phi(t_k, \tau) \cdot D(\tau) \cdot \overline{Q} \cdot D^T(\tau) \cdot \Phi^T(t_k, \tau) \, d\tau \tag{35}$$

mit

$$E(\underline{W}_{k-1}) = \underline{O}$$

$$k = 1, 2, 3, \ldots$$
und

$$\overline{Q} = E(\underline{\overline{W}}(\tau)\underline{\overline{W}}T(\tau)) \text{ nach Gl. (25) .}$$

Zur näherungsweisen Berechnung von $Q_{k-1}$ wird die Trapezintegrationsmethode vorgeschlagen. Danach ergibt sich

$$Q_{k-1} \approx \left(D(t_K) \cdot \overline{Q} \cdot D(t_K) + \Phi_{k,k-1} \cdot D(t_K) \cdot \overline{Q} \cdot D(t_K) \cdot \Phi_{k,k-1}\right) \cdot \frac{T_{KA}}{2} \tag{36}$$

mit
$D(t_K)$: Systemrauscheingangsmatrix zum Zeitpunkt $t_K = kT_{KA}$ .

Da die Positionsstützungen (-Fixe) ausschließlich zu diskreten Zeitpunkten $t = T_i$; $i = 1, 2, 3, \ldots$ erfolgen, geht die zeitkontinuierliche Meß- (Stützungs-) Fehlergleichung (21) über in

$$\underline{\Delta Z}(t = T_i) = M(t = T_i) \cdot \underline{\Delta X}(t = T_i) + \underline{V}(t = T_i) \tag{37}$$

mit
$M(t = T_i)$: nach Gl. (24).
Dies bedeutet in zeitdiskreter Schreibweise

$$\underline{\Delta Z}_k = \begin{cases} M_k \cdot \underline{\Delta X}_k + \underline{v}_k \; ; & k = k_i = \dfrac{T_i}{T_{KA}} \\[2mm] \underline{0} \quad ; & \text{sonst} \end{cases}$$

(38)

$$i = 1, \, 2, \, 3, \, \ldots \, .$$

Für die zeitdiskrete Meß- (Stützungs-) Rauschmatrix ergibt sich:

$$E(\underline{V}_k \cdot \underline{V}_k^T) = V_{k \, = \, V \, = \, \text{Konst.}} \qquad (39)$$

mit

$$E(\underline{V}_k) = \underline{O}$$

und

$V$ : nach Gl. (26).

Für die zeitdiskrete Koppelrechnung zur Berechnung des Koppelorts aus den aktuellen Geschwindigkeits- und Kursinformationen werden 2 Verfahren vorgeschlagen:

● Verfahren 1

Bei diesem Verfahren werden die das "reale" Basisnavigationssystem beschreibenden Differentialgleichungen (7a) und (7b) direkt zeitdiskretisiert, d.h. es wird das Rechteckintegrationsverfahren angewendet. Damit erhält man als Koppelposition zum Zeitpunkt

$$t_{l+1} = (l+1)T_{KO}$$

$$RN_{l+1}^{FOA} = RN_l^{FOA} + VNM_{l+1} \cdot T_{KO} \qquad (40a)$$

$$RE_{l+1}^{FOA} = RE_l^{FOA} + VEM_{l+1} \cdot T_{KO} \qquad (40b)$$

$$l = 0, \, 1, \, 2, \, 3, \, \ldots$$

● Verfahren 2

Etwas genauere Ergebnisse liefert die Anwendung der Trapezintegrationsmethode auf die Gl. (7a) und (7b). Hiernach ergibt sich

16

$$RN_{1+1}^{FOA} = RN_1^{FOA} + (VNM_{1+1} + VNM_1) \cdot \frac{T_{KO}}{2} \qquad (41a)$$

$$RE_{1+1}^{FOA} = RE_1^{FOA} + (VEM_{1+1} + VEM_1) \cdot \frac{T_{KO}}{2} \qquad (41b)$$

$$1 = 0, 1, 2, 3, \ldots$$

Zeitdiskrete Kalman-Filter-Algorithmen (simultane Stützungsdatenverarbeitung)

Die für eine Mikrorechner-Realisierung geeigneten zeitdiskreten Kalman-Filter-Algorithmen werden wie folgt formuliert:

- Rekursive Prädiktions-(Extrapolations-) Algorithmen zur a priori-Systemfehlerabschätzung

- A priori-Schätzfehler $\underline{\hat{\Delta X_k}}^*$ zum Zeitpunkt $t_k = kT_{KA}$:

--------------------------------------------------------

$$\underline{\hat{\Delta X_k}}^* = \Phi_{k,k-1} \cdot \underline{\hat{\Delta X}}_{k-1}$$

mit

$$k = 1, 2, 3, \ldots ,$$

$\underline{\hat{\Delta X_0}}$ : Anfangs-Schätzfehler (geeignet vorzugeben) $\qquad (42)$

$\Phi_{k,k-1}$ : nach Gl. (31).

- A priori-Schätzfehler-Kovarianzmatrix $P_k^*$ zum Zeitpunkt $t_k = kT_{KA}$:

$$P_k^* = \Phi_{k,k-1} \cdot (P_{k-1} + D(t_K) \cdot \overline{Q} \cdot D(t_K)^T \cdot \frac{T_{KA}}{2}) \cdot \Phi_{k,k-1}^T +$$

$$+ D(t_K) \cdot \overline{Q} \cdot D(t_K)^T \cdot \frac{T_{KA}}{2} \qquad (43)$$

mit

k :        1, 2, 3, ... ,

$D(t_K)$:    Systemrauscheingangsmatrix zum Zeitpunkt $t_K = kT_{KA}$

$\overline{Q}$ :       nach Gl. (25).

- Anfangs-Schätzfehlerkovarianzmatrix $P_o$ (geeignet vorzugeben):

$$P_o = Diag (\sigma_N^2(O), \sigma_E^2(O); \sigma_{V1}^2; \sigma_{\theta1}^2, \sigma_{\theta2}^2, \sigma_\epsilon^2) \qquad (44)$$

- Algorithmen für die Korrektur der a priori-Systemfehlerabschätzung durch die Messungen (Positionsfixes):

- Verstärkungsmatrix $B_k$ zum Zeitpunkt $t_k = kT_{KA}$:

$$B_k = \begin{cases} P_k^* \cdot M^T \cdot [M \cdot P_k^* \cdot M^T + V]^{-1}; & k = k_i = \dfrac{T_i}{T_{KA}} \\ \\ 0 & ; \quad \text{sonst} \end{cases} \qquad (45)$$

mit

$i =$ 1, 2, 3, ...,
$k =$ 1, 2, 3, ...,
$M :$ nach Gl. (24),
$V :$ nach Gl. (39).

- A posteriori-Schätzfehler $\widehat{\underline{\Delta X}}_k$ zum Zeitpunkt $t_k = kT_{KA}$:

$$\widehat{\underline{\Delta X}}_k = \widehat{\underline{\Delta X}}_k^* + \begin{cases} B_k \cdot [\underline{Z}_k - M \cdot \widehat{\underline{\Delta X}}_k^*]; & k = k_i = \dfrac{T_i}{T_{KA}} \\ \\ \underline{0} & ; \quad \text{sonst} \end{cases} \qquad (46)$$

mit

$i =$ 1, 2, 3, ...,
$k =$ 1, 2, 3, ...,

und

$\underline{Z}_k = (ZN(t_k), ZE(t_k))^T$ nach Gl. (8a) und (8b).

- A posteriori-Schätzfehlerkovarianzmatrix $P_k$ zum Zeitpunkt $t_k = kT_{KA}$:

$P_k = \frac{1}{2} \cdot (\overline{P}_k + \overline{P}_k^T)$ (47)

mit

$$\overline{P}_k = \begin{cases} [I - B_k \cdot M] \cdot P_k^* \cdot [I - B_k \cdot M]^T + B_k \cdot V \cdot B_k^T; & k = k_i = \dfrac{T_i}{T_{KA}} \\ \\ P_k^* & ; \quad \text{sonst} \end{cases} \qquad (48)$$

und

$i =$ 1, 2, 3, ...,
$k =$ 1, 2, 3, ...,

Modifizierte Algorithmen für das korrigierte Navigationssystem

Das zeitdiskrete Kalman-Filter liefert damit quasi kontinuierlich neben den a priori-Schätzfehlern sowie den a priori- und a posteriori- Schätzfehlerkovarianzmatrizen auch die a posteriori Schätzfehler. Aus diesen Schätzwerten mit minimaler Fehlervarianz lassen sich nun direkt "optimale" Korrekturgrößen berechnen, die zur Fehlerkompensation in das Navigationssystem zurückgeführt werden. Das so entstehende Navigationssystem im geschlossenen Regelkreis- korrigiertes Navigationssystem - erzeugt dann automatisch die "optimal" verbesserten Navigationsdaten, d.h. Daten mit minimalen Fehlern.

Im folgenden werden die aufgrund der Rückführungen sich ergebenden modifizierten Algorithmen für das korrigierte Navigationssystem angegeben.

Zeitdiskrete mathematische Modelle für die korrigierten Meß- (Eingangs-) Größen (Signale)

● Korrigierte Fahrzeuggeschwindigkeit $CV_{k,k-1}$:

$$CV_{k,k-1} = VM_{k,k-1} - \chi_{k,k-1} \cdot C(V)_{k-1} - DF(V)_{k-1} \qquad (49)$$

mit

$$\chi_{k,k-1} = \begin{cases} \dfrac{VM_{k,k-1}}{VM_{k-1}} & \text{für} \quad VM_{k-1} > \alpha \; [km/h] \\[2em] 1 & \text{für} \quad VM_{k-1} < \alpha \; [km/h] \end{cases} \qquad (50)$$

$$k = 1, 2, 3, \ldots$$

Dabei bedeuten:

$CV_{k,k-1}$ : Korrigierte Fahrzeuggeschwindigkeiten während des Kalman-Intervalls ($t_k = kT_{KA}$, $t_{k-1} = (k-1)T_{KA}$), d.h. innerhalb des Bereiches $kqT_{KO} > t_I > (k-1)qT_{KO}$ bzw. $I = (k-1)q+1,\ldots,kq$

$VM_{k,k-1}$ : Gemessene plausible Fahrzeuggeschwindigkeiten während des Kalman-Intervalls ($t_k = kT_{KA}$, $t_{k-1} = (k-1)T_{KA}$), d.h. innerhalb des Bereiches $kq \cdot T_{KO} > t_I > (k-1)qT_{KO}$ bzw. $I = (k-1)q+1, \ldots, Kq$

$VM_{k-1}$ : Gemessene plausible Fahrzeuggeschwindigkeit zum Zeitpunkt $t_{k-1} = (k-1)T_{KA}$

$C(V)_{k-1}$ : Korrekturwert für die gemessene plausible Fahrzeuggeschwindigkeit zum Zeitpunkt $t_{k-1} = (k-1)T_{KA}$

$DF(V)_{k-1}$ : Deterministischer Geschwindigkeitsfehler zum Zeitpunkt $t_{k-1} = (k-1)T_{KA}$

$\chi_{k,k-1}$ : Proportionalitätsfaktor für den Fahrzeuggeschwindigkeits-Korrekturwert $C(V)_{k-1}$ während des Kalman-Intervalls ($t_k = kT_{KA}$, $t_{k-1} = (k-1)T_{KA}$), d.h. innerhalb des Bereiches $kqT_{KO} > t_I > (k-1)qT_{KO}$ bzw. $I = (k-1)q+1, \ldots, kq$

$\alpha$ : Konstanter Geschwindigkeitswert, abhängig vom gewählten Geschwindigkeitsgeber

● Korrigierter Kurswinkel $C\theta_{k,k-1}$:

$$C\theta_{k,k-1} = \theta M_{k,k-1} - C(\theta)_{k-1} - DF(\theta)_{k-1} \qquad (51)$$

$k = 1, 2, 3, \ldots$ .

Hier sind

$C\theta_{k,k-1}$ : Korrigierte Kurswinkel während des Kalman-Intervalls ($t_k = kT_{KA}$, $t_{k-1} = (k-1)T_{KA}$) ; d.h. innerhalb des Bereiches $kqT_{KO} > t_I > (k-1)qT_{KO}$ bzw. $I = (k-1)q+1, \ldots, kq$

$\theta M_{k,k-1}$ : Gemessene plausible Kurswinkel während des Kalman-Intervalls ($t_k = kT_{KA}$, $t_{k-1} = (k-1)T_{KA}$), d.h. innerhalb des Bereiches $kqT_{KO} > t_I > (k-1)qT_{KO}$ bzw. $I = (k-1)q+1, \ldots, kq$

$C(\theta)_{k-1}$ : Korrekturwert für den gemessenen plausiblen Kurswinkel zum Zeitpunkt $t_{k-1} = (k-1)T_{KA}$

$DF(\theta)_{k-1}$ : Deterministischer Kurswinkelfehler zum Zeitpunkt $t_{k-1} = (k-1)T_{KA}$

● Fahrzeugposition (Positionsfixe):

Die Positionsfixe selbst werden nicht korrigiert.

● Korrigiertes zeitdiskretes Basisnavigationssystem → korrigierte zeitdiskrete Systemgleichungen:

Entsprechend Gl. (7a) und (7b) erhält man hier mit Gl. (49) bis (51)

$$CVN_{k,k-1} = CV_{k,k-1} \cdot \cos C\theta_{k,k-1} \qquad (52a)$$

$$CVE_{k,k-1} = CV_{k,k-1} \cdot \sin C\theta_{k,k-1} \qquad (52b)$$

wobei

$$\left.\begin{array}{l} \text{CVN}_{k,k-1} \\ \text{CVE}_{k,k-1} \end{array}\right\}: \quad$$ Korrigierte Fahrzeuggeschwindigkeiten in Nord- (N-) und Ost- (E-) Richtung während des Kalman-Intervalls ($t_k = kT_{KA}$, $t_{k-1} = (k-1)T_{KA}$), d.h. innerhalb des Bereiches $kqT_{KO} \geq t_l \; \rangle \; (k-1)qT_{KO}$ bzw. $l = (k-1)q+1,\ldots,kq$

● Korrigierte zeitdiskrete Meß- (Stützungs-) Gleichungen

Hier ergibt sich analog Gl. (8a) und (8b) durch Vergleich der Positionsstützungsdaten ($\text{RNS}_i$; $\text{RES}_i$) mit der mittels - im folgenden dargestellten - Koppelrechnung zu berechnenden korrigierten Fahrzeugposition ($\text{CRN}_i$; $\text{CRE}_i$)

$$\text{CZN}_l = \begin{cases} \text{RNS}_l - \text{CRN}_l^{\text{FOA}} \; ; & l = l_i = \dfrac{T_i}{T_{KO}} = k_i q \\ 0 \; ; & \text{sonst} \end{cases} \qquad (53a)$$

$$\text{CZE}_l = \begin{cases} \text{RES}_l - \text{CRE}_l^{\text{FOA}} \; ; & l = l_i = \dfrac{T_i}{T_{KO}} = k_i q \\ 0 \; ; & \text{sonst} \end{cases} \qquad (53b)$$

$$i = 1, 2, 3, \ldots$$

$$\left.\begin{array}{l} \text{CZN}_l \\ \text{CZE}_l \end{array}\right\}: \quad$$ "Korrigierte" Positionsdifferenz in Nord- (N-) und Ost- (E-) Richtung zum Zeitpunkt $t_l = lT_{KO}$

Die Koppelrechnung im korrigierten Navigationssystem kann wiederum nach den schon beschriebenen 2 Verfahren vorgenommen werden

● Verfahren 1 [Rechteckintegration entsprechend Gl. (40a) und (40b)]

Die Koppelposition zum Zeitpunkt $t_{l+1} = (l+1)T_{KO}$ lautet mit Gl. (52a) und (52b)

$$\text{CRN}_{1+1} \overset{\text{FOA}}{=} \text{CRN}_1 \overset{\text{FOA}}{+} \begin{cases} \text{CVN}_{1+1} \cdot T_{KO} & ; \; 1 = \dfrac{t_1}{T_{KO}} = 0, \; 1, \; 2, \; 3, \; \ldots \\[2ex] \text{CVN}_{1+1} \cdot T_{KO} - C(\text{RN})_1 & ; \; 1 = 1_i = \dfrac{T_i}{T_{KO}} = k_i q \end{cases} \tag{54a}$$

$$\text{CRE}_{1+1} \overset{\text{FOA}}{=} \text{CRE}_1 \overset{\text{FOA}}{+} \begin{cases} \text{CVE}_{1+1} \cdot T_{KO} & ; \; 1 = \dfrac{t_1}{T_{KO}} = 0, \; 1, \; 2, \; 3, \; \ldots \\[2ex] \text{CVE}_{1+1} \cdot T_{KO} - C(\text{RE})_1 & ; \; 1 = 1_i = \dfrac{T_i}{T_{KO}} = k_i q \end{cases} \tag{54b}$$

$$i = 1, \; 2, \; 3, \; \ldots$$

● <u>Verfahren 2</u> [Trapezintegration entsprechend Gl. (41a) und (41b)]

Hier erhält man zum Zeitpunkt $t_{l+1} = (l+1)T_{KO}$ mit Gl. (52a) und (52b)

$$\text{CRN}_{1+1} \overset{\text{FOA}}{=} \text{CRN}_1 \overset{\text{FOA}}{+} \begin{cases} [\text{CVN}_{1+1} + \text{CVN}_1] \cdot \dfrac{T_{KO}}{2} & ; \; 1 = \dfrac{t_1}{T_{KO}} = 0, \; 1, \; 2, \; 3, \; \ldots \\[3ex] [\text{CVN}_{1+1} + \text{CVN}_1] \cdot \dfrac{T_{KO}}{2} - C(\text{RN})_1 & ; \; 1 = 1_i = \dfrac{T_i}{T_{KO}} = k_i q \end{cases}$$

$$\tag{55a}$$

$$\text{CRE}_{1+1} \overset{\text{FOA}}{=} \text{CRE}_1 \overset{\text{FOA}}{+} \begin{cases} [\text{CVE}_{1+1} + \text{CVE}_1] \cdot \dfrac{T_{KO}}{2} & ; \; 1 = \dfrac{t_1}{T_{KO}} = 0, \; 1, \; 2, \; 3, \; \ldots \\[3ex] [\text{CVE}_{1+1} + \text{CVE}_1] \cdot \dfrac{T_{KO}}{2} - C(\text{RE})_1 & ; \; 1 = 1_i = \dfrac{T_i}{T_{KO}} = k_i q \end{cases}$$

$$\tag{55b}$$

$$i = 1, \; 2, \; 3, \; \ldots$$

Dabei sind die Anfangsbedingungen

$$\text{CRN}_O = \text{RN}_O$$
$$\text{CRE}_O = \text{RE}_O$$
$$\text{CV}_O = \text{V}_O$$
$$\text{C}\theta_O = \theta_O$$

geeignet vorzugeben.

Die Positionskorrekturwerte $C(\text{RN})_l$ und $C(\text{RE})_l$,

$$1 = 1_i = \frac{T_i}{T_{KO}} = k_i q;$$

$i = 1, 2, 3, \ldots$ in den Gl. (54) und (55) werden ebenso wie die Korrekturgrößen $C(V)_k$ und $C(\theta)_k$; $k = 1, 2, 3,$ ... mittels dem im folgenden formulierten modifizierten zeitdiskreten Kalman-Filter berechnet.

Modifizierte zeitdiskrete Kalman-Filter-Algorithmen (simultane Stützungsverarbeitung) für das korrigierte Navigationssystem

Nach Aufstellung der Fehlergleichungen für das korrigierte Navigationssystem durch Anwendung des Fehlerfortpflanzungsgesetzes und daran anschließend der Fehlermodelle erfolgt entsprechend den Vorgehensweisen für den unkorrigierten Fall die Zustandsraumdarstellung der zeitdiskreten System- und Meß- (Stützungs-) Fehlergleichungen. Diese Gleichungen bilden die Voraussetzung für die Anwendung des im folgenden formulierten modifizierten zeitdiskreten Kalman-Filters für das korrigierte Navigationssystem.

● Rekursiver Prädiktions- (Extrapolations-) Algorithmus zur a priori-Systemfehlerabschätzung

- Korrigierte a priorl-Schätzfehlerkovarianzmatrix $CP_k^*$ zum Zeitpunkt $t_k = kT_{KA}$:

$$CP_k^* = C\Phi_{k,k-1} \cdot (CP_{k-1} + CD(t_K) \cdot \overline{Q} \cdot CD^T(t_K) \cdot \frac{T_{KA}}{2}) \cdot C\Phi_k^T{}_{,k-1} +$$
$$+ CD(t_K) \cdot \overline{Q} \cdot CD^T(t_K) \cdot \frac{T_{KA}}{2}$$
$$k = 1, 2, 3, \ldots \tag{56}$$

mit

$CP_O = P_O$ nach Gl. (44), geeignet vorzugeben;

$$C\Phi_{k,k-1} = \prod_{l=kq}^{(k-1)q+1} C\Phi_{l,l-1}$$
$$k = 1, 2, 3, \ldots , \tag{57}$$

wobei

$$C\Phi_{l,l-1} = I + CA(t_l) \cdot T_{KO} \quad (+ \frac{CA^2(t_l)}{2} \cdot T_{KO}^2 + \ldots)$$
$$l = 1, 2, 3, \ldots , \tag{58}$$

$I$ :  Einheitsmatrix,
$CA(t_l)$ :  korrigierte Systemmatrix zum Zeitpunkt $t_l = lT_{KO}$ ,
$CD(t_k)$ :  korrigierte Systemrauscheingangsmatrix zum Zeitpunkt $t_k = kT_{KA}$
mit
$C\theta_l$ :  nach Gl. (51),
$CVN_l$ :  nach Gl. (52a),
$CVE_l$ :  nach Gl. (52b);
sowie
$\overline{Q}$ :  nach Gl. (25).

● Rekursive Algorithmen für die Korrektur der a priori-Systemfehlerabschätzung durch die Messungen (Positionsfixe):

- Korrigierte Verstärkungsmatrix $CB_k$ zum Zeitpunkt $t_k = kT_{KA}$:

$$CB_k = \begin{cases} CP_k^* \cdot M^T \cdot [M \cdot CP_k^* \cdot M^T + V]^{-1} & ; \; k = k_i = \dfrac{T_i}{T_{KA}} \\ 0 & ; \; \text{sonst} \end{cases} \qquad (59)$$

$$i = 1, 2, 3, \ldots,$$
$$k = 1, 2, 3, \ldots,$$

mit

M : nach Gl. (24),
V : nach Gl. (39).

- Korrekturgrößenvektor $\underline{C}_k$ zum Zeitpunkt $t_k = kT_{KA}$:

$$\underline{C}_k = \underline{C}_{k-1} + \begin{cases} CB_k \cdot \underline{CZk} & ; \quad k = k_i = \dfrac{T_i}{T_{KA}} \\ \underline{0} & ; \quad \text{sonst} \end{cases} \qquad (60)$$

$$i = 1, 2, 3, \ldots,$$
$$k = 1, 2, 3, \ldots \; .$$

In Gl. (60) bedeutet
$\underline{C}_O = \underline{O}$ : Anfangsbedingung

$$\underline{C}_k = (C(RN)_k, C(RE)_k; C(V_1)_k; C(\theta_1)k, C(\theta_2)_k, C(\epsilon)_k)^T \qquad (61)$$

$$\underline{C}_{k-1} = (O, O; \chi_{k,k-1} \cdot C(V_1)_{k-1}; C(\theta_1)_{k-1}, C(\theta_2)_{k-1}, C(\epsilon)_{k-1})^T \qquad (62)$$

mit den Grenzbedingungen

$$\begin{aligned}
\left| C(V_1)_k - \chi_{k-1,k} \cdot C(V_1)_{k-1} \right| &< \gamma V_1, \\
\left| C(\theta_1)_k - C(\theta_1)_{k-1} \right| &< \gamma\theta_1, \\
\left| C(\theta_2)_k - C(\theta_2)_{k-1} \right| &< \gamma\theta_2, \\
\left| C(\epsilon)_k - C(\epsilon)_{k-1} \right| &< \gamma\epsilon,
\end{aligned} \qquad (63)$$

wobei

$$\left. \begin{aligned} \gamma V_1 \\ \gamma\theta_1 \\ \gamma\theta_2 \\ \gamma\epsilon \end{aligned} \right\} : \text{Konstante, sensorspezifische Werte;}$$

sowie

23

$$\underline{CZ}_k = (CZN_k, CZE_k)^T \quad (64)$$

mit

$CZN_k$ : nach Gl. (53a),

$CZE_k$ : nach Gl. (53b).

Als "optimale" Kurs- und Geschwindigkeitskorrekturwerte gewinnt man schließlich

$$C(V)_k \leftarrow C(V_1)_k \quad (65)$$

$$C(\theta)_k \leftarrow C(\theta_1)_k + C(\theta_2)_k \quad (66)$$

- Korrigierte a posteriori-Schätzfehlerkovarianzmatrix $CP_k$ zum Zeitpunkt $t_k = kT_{KA}$:

$$CP_k = \frac{1}{2} \cdot (\overline{CP}_k + \overline{CP}_k^{\;T}) \quad (67)$$

mit

$$\overline{CP}_k = \begin{cases} (I-CB_k \cdot M) \cdot CP_k^* \cdot (I-CB_k \cdot M)^T + CB_k \cdot V \cdot CB_k^T \; ; & k = k_i = \dfrac{T_i}{T_{KA}} \\[2ex] CP_k^* & ; \quad \text{sonst} \end{cases} \quad (68)$$

$$i = 1, 2, 3, \ldots,$$
$$k = 1, 2, 3, \ldots \; .$$

Für die allgemeinere Anwendung entsprechend Fig. 1, wo quasi gleichzeitig mehrere Fahrzeug-Navigationsdaten für Stützungen - z. B. auch Positions- und/oder Kurswinkel- und/oder Geschwindigkeitswerte von Funk- und/oder Satellitennavigationsanlagen - zur Verfügung stehen, werden im folgenden die daraus resultierenden Änderungen bzw. Ergänzungen in den Modellbildungs- sowie Kalman-Filter-Algorithmen angegeben.

Die einzelnen Stützungsgrößen werden nun (anstatt Gl. (5), (6)) wie folgt modelliert:

● Auf Plausibilität überprüfte Positionsmeßdaten für Positionsstützungen $RNS^{(jP)}(t)$, $RES^{(jP)}(t)$:

$$RNS^{(jP)}(t) = RN(t) + \Delta RNS^{(jP)}(t) \quad (69a)$$

$$RES^{(jP)}(t) = RE(t) + \Delta RES^{(jP)} \quad (69b)$$

mit

$RN(t)\}$     : fehlerfreie Fahrzeugposition in Nord-(N-)

$RE(t)\}$      und Ost-(E-) Richtung,

$\Delta RNS^{(jP)}(t)\}$ : jP-ter Positionsmeß-(stützungs-)Fehler in

$\Delta RES^{(jP)}(t)\}$   Nord-(N-) und Ost-(E-) Richtung

und

jP = 1,..,NP :      Anzahl der quasi gleichzeitig vorhandenen Positionsstützungsdaten.

● Auf Plausibilität überprüfte Kurswinkelmeßdaten für Kurswinkelstützungen $\theta S^{(j\theta)}(t)$:

$$\theta S^{(j\theta)}(t) = \theta(t) + \Delta\theta S^{(j\theta)}(t) \qquad (70)$$

mit

     $\theta S(t)$ :      fehlerfreier Kurswinkel,
     $\Delta\theta S^{(j\theta)}(t)$ :      $j\theta$-ter Kurswinkelmeß-(stützungs-)Fehler
und

     $j\theta$ = 1,..,$N\theta$ :      Anzahl der quasi gleichzeitig vorhandenen Kurswinkelstützungsdaten.

● Auf Plausibilität überprüfte Geschwindigkeitsmeßdaten für Geschwindigkeitsstützungen $VS^{(jV)}(t)$:

$$VS^{(jV)}(t) = V(t) + \Delta VS^{(jV)}(t) \qquad (71)$$

mit

     $V(t)$ :      fehlerfreie Fahrzeuggeschwindigkeit,
     $\Delta VS^{(jV)}(t)$ :      $jV$-ter Geschwindigkeitsmeß-(stützungs-)Fehler
und

     $jV$ = 1,..,NV :      Anzahl der quasi gleichzeitig vorhandenen Geschwindigkeitsstützungsdaten.

     Abweichend von Gl. (8a) und (8b) gewinnt man jetzt folgende zeitkontinuierliche Meß-(Stützungs-)Gleichungen:

Die Positionsstützungsgleichungen ergeben sich durch Vergleiche der nach Durchführung der Koppelrechnung resultierenden Orte ($RN^{FOA}(t)$, $RE^{FOA}(t)$) mit den Positionsstützungsdaten ($RNS^{(jP)}(t)$, $RES^{(jP)}(t)$) zu

$$ZN^{(jP)}(t) = RNS^{(jP)}(t) - RN^{FOA}(t) \qquad (72a)$$

$$ZE^{(jP)}(t) = RES^{(jP)}(t) - RE^{FOA}(t) \qquad (72b)$$

jP = 1,..,NP

mit

$$\left.\begin{array}{l} ZN^{(jP)}(t)\} \\ ZE^{(jP)}(t)\} \end{array}\right. \quad : \text{jP-te Abweichungen zwischen Koppelort und jP-ter Stützposition in Nord-(N-) und Ost-(E-)Richtung.}$$

     Die Kurswinkelstützungsgleichungen erhält man durch Vergleiche der Kurswinkelmeßsignale ($\theta M(t)$) mit den Kurswinkelstützungsdaten ($\theta S^{(j\theta)}(t)$) :

$$Z\theta^{(j\theta)}(t) = \theta S^{(j\theta)}(t) - \theta M(t) \qquad (73)$$

$j\theta$ = 1,..,$N\theta$

mit

     $Z\theta^{(j\theta)}(t)$ :      $j\theta$-te Differenz zwischen Kurswinkelmeßsignal und $j\theta$-ten Kurswinkelstützungswert.

     Die Geschwindigkeitsstützungsgleichungen gewinnt man entsprechend, in dem die Geschwindigkeitsmeßsignale ($VM(t)$) mit den Geschwindigkeitsstützungsdaten ($VS^{(jV)}(t)$) verglichen werden:

$$ZV^{(jV)}(t) = VS^{(jV)}(t) - VM(t) \qquad (74)$$

jV = 1,..,NV

mit

$ZV^{(jV)}(t)$ :   jV-te Abweichung zwischen Geschwindigkeitsmeßsignal und jV-tem Geschwindigkeitsstützungswert.

## Zeitkontinuierliche Fehlergleichungen

Anstatt der Gl. (10a) und (10b) erhält man hier nach Anwendung des Fehlerfortpflanzungsgesetzes auf die Gl. (72a) bis (74) folgende Meß-(Stützungs-)Fehlergleichungen:

● Fehler infolge Positionsstützungen:

$$\Delta ZN^{(jP)}(t) = \Delta RNS^{(jP)}(t) - \Delta RN(t) = ZN^{(jP)}(t) \qquad (75a)$$

$$\Delta ZE^{(jP)}(t) = \Delta RES^{(jP)}(t) - \Delta RE(t) = ZE^{(jP)}(t) \qquad (75b)$$

$jP = 1,..,NP$

mit

$$\begin{aligned} \Delta ZN^{(jP)}(t)\} & \quad : \text{jP-te Positionsfehlerdifferenzen in Nord-(N-)} \\ \Delta ZE^{(jP)}(t)\} & \quad \text{und Ost-(E-) Richtung.} \end{aligned}$$

● Fehler infolge Kurswinkelstützungen:

$$\Delta Z\theta^{(j\theta)}(t) = \Delta\theta S^{(j\theta)}(t) - \Delta\theta(t) = Z\theta^{(j\theta)}(t) \qquad (76)$$

$j\theta = 1,..,N\theta$

mit
$\Delta Z\theta^{(j\theta)}(t)$ :   jθ-te Kurswinkelfehlerdifferenz.

● Fehler infolge Geschwindigkeitsstützungen:

$$\Delta ZV^{(jV)}(t) = \Delta VS^{(jV)}(t) - \Delta V(t) = ZV^{(jV)}(t) \qquad (77)$$

$jV = 1,..,NV$

mit
$\Delta ZV^{(jV)}(t)$ :   jV-te Geschwindigkeitsfehlerdifferenz.

Die mathematische Modellbildung für die einzelnen Stützungsfehler geschieht nun, abweichend von Gl. (13), wie folgt:

Es wird angenommenm, daß sämtliche bei den Stützungen auftretenden Fehler sich durch GAUSS'sches WEISSES, d.h. normal verteiltes (zeit-)unkorreliertes Rauschen beschreiben lassen. Damit ergeben sich folgende Fehlermodelle:

● Positionsstützungsfehlermodelle (in Vektordarstellung):

$$\underline{\Delta RS}^{(jP)}(t) = \begin{bmatrix} \Delta RNS^{(jP)}(t) \\ \Delta RES^{(jP)}(t) \end{bmatrix} = \begin{bmatrix} \Delta RNSWR^{(jP)}(t) \\ \Delta RESWR^{(jP)}(t) \end{bmatrix} = \underline{\Delta RSWR}^{(jP)}(t)$$

$$(78)$$

mit

$\underline{\Delta RSWR}^{(jP)}(t) \sim N[\underline{O};\ VP^{(jP)}(t)]$

und

$$VP^{(jP)}(t) = VP^{(jP)} = \begin{bmatrix} (\sigma_N^{(jP)})^2 & 0 \\ 0 & (\sigma_E^{(jP)})^2 \end{bmatrix},$$

$$jP = 1,..,NP\ .$$

Dies bedeutet, daß die Vektoren der Positionsfehleranteile $(\Delta RNSWR^{(iP)}(t),\ \Delta RESWR^{(jP)}(t);\ jP = 1,...,NP)$ jeweils durch stationäre WEISSE Rauschen mit Normal-(N-)Verteilungen, abgekürzt dargestellt durch die Mittelwertvektoren O sowie die Kovarianz- bzw. Spektraldichtematrizen $VP^{(jP)}$ mit den Einzelvarianzen in Nord-(N-) und Ost($\bar{E}$-) Richtung $(\sigma_N^{(jP)})^2$ und $(\sigma_E^{(jP)})^2$ nachgebildet werden.

● Kurswinkelstützungsfehlermodelle:

$$\Delta\theta S^{(j\theta)}(t) = \Delta\theta SWR^{(j\theta)}(t) \qquad (79)$$

mit

$$\Delta\theta SWR^{(j\theta)}(t) \sim N[0;\ (\sigma_{\theta S}^{(j\theta)})^2]\ :$$ Abgekürzte Schreibweise für die
$$j\theta \qquad = 1,..,N\theta$$ Kurswinkelstützungsfehlernachbildung $(\Delta\theta SWR^{(j\theta)}(t)\ :\ j\theta = 1,..,N\theta)$
als stationäre WEISSE Rauschen mit
Normal-(N-) Verteilungen, Mittelwerten 0 und spektralen Leistungsdichten bzw. Varianzen $(\sigma_{\theta S}^{(j\theta)})^2$.

● Geschwindigkeitsstützungsfehlermodelle

$$\Delta VS^{(jV)}(t) = \Delta VSWR^{(jV)}(t) \qquad (80)$$

mit

$$\Delta VSWR^{(jV)}(t) \sim N[0, (\sigma_{VS}^{(jV)})^2] :$$ Abgekürzte Schreibweise für die Geschwindigkeitsstützungsfehlernachbildung ($\Delta VSWR^{(jV)}(t)$; jV = 1,..,NV) als stationäre WEISSE Rauschen mit Normal-(N-)Verteilungen, Mittelwerten 0 und spektralen Leistungsdichten bzw. Varianzen ($\sigma_{VS}^{(jV)})^2$.

$$jV = 1,..,NV$$

Weiterhin werden in diesem Zusammenhang die Annahmen getroffen, daß sowohl die Fehler $\Delta\theta_3(t)$ und $\Delta\theta SWR^{(j\theta)}(t)$; $j\theta = 1,..,N\theta$ als auch die Fehler $\Delta V_2(t)$ und $\Delta VSWR^{(jV)}(t)$; jV = 1,..,NV untereinander unkorreliert sein mögen.

Durch Einsetzen der Gl. (78) bis (80) in die Gl. (75) bis (77) erhält man dann anstatt der Gl. (15a) und (15b) folgendes zeitkontinuierliches Meß-(Stützungs-)Fehlergleichungssystem:

$$\Delta ZN^{(jP)}(t) = - \Delta RN(t) + \Delta RNSWR^{(jP)}(t) \qquad (81a)$$

$$\Delta ZE^{(jP)}(t) = - \Delta RE(t) + \Delta RESWR^{(jP)}(t) \qquad (81b)$$

jP = 1,..,NP;

$$\Delta Z\theta^{(j\theta)}(t) = - \Delta\theta_1(t) - \Delta\theta_2(t) - \Delta\theta_3(t) + \Delta\theta SWR^{(j\theta)}(t) \qquad (82)$$

$j\theta = 1,..,N\theta$;

$$\Delta ZV^{(jV)}(t) = - \Delta V_1(t) - \Delta V_2(t) + \Delta VSWR^{(jV)}(t) \qquad (83)$$

jV = 1,..,NV.

Für die Zustandsraumdarstellung der zeitkontinuierlichen Meß-(Stützungs-)Fehlergleichungen (Gl. (81) bis (83)) nach Gl. (21) müssen die entsprechenden Vektoren und Matrizen (Gl. (18), (19), (24) und (26)) neu definiert werden. Als günstig für eine Mikrorechnerrealisierung erweisen sich folgende Festlegungen:

● Meß-(Stützungs-)Vektor (anstatt Gl. (18)):

$$\underline{\Delta Z}(t) = (\underline{\Delta ZP}^{(jP)}(t) \;\vdots\; \underline{\Delta Z\theta}^{(j\theta)}(t) \;\vdots\; \underline{\Delta ZV}^{(jV)}(t))^T \qquad (84)$$

wobei

$$\underline{\Delta ZP}^{(jP)}(t) = (\Delta ZN^{(jP)}(t), \Delta ZE^{(jP)}(t))^T \qquad (84a)$$

jP = 1,..,NP ;

$$\underline{\Delta Z\theta}^{(j\theta)}(t) = \Delta Z\theta^{(j\theta)}(t) \qquad (84b)$$

$j\theta = 1,..,N\theta$ ;

$$\underline{\Delta ZV}^{(jV)}(t) = \Delta ZV^{(jV)}(t) \qquad (84c)$$

jV = 1,..,NV .

● Meß-(Stützungs-)Matrix (anstatt Gl. (24)):

$$M(t) = M = (MP^{(jP)} \mid M\Theta^{(j\Theta)} \mid MV^{(jV)})^T \qquad (85)$$

mit

$$MP^{(jP)} = \begin{bmatrix} -1 & 0 & 0 & 0 & 0 & 0 \\ 0 & -1 & 0 & 0 & 0 & 0 \end{bmatrix} \qquad (85a)$$

$$jP = 1,..,NP ;$$

$$M\theta^{(j\theta)} = (0\ 0\ 0\ -1\ -1\ 0) \qquad (85b)$$

$$j\theta = 1,..,N\theta ;$$

$$MV^{(jV)} = (0\ 0\ -1\ 0\ 0\ 0) \qquad (85c)$$

$$jV = 1,..,NV .$$

● Meß-(Stützungs-)Rauschvektor (anstatt Gl. (19)):

$$\underline{\overline{V}}(t) = (\underline{VP}^{(jP)}(t) \mid \underline{V\Theta}^{(j\Theta)}(t) \mid \underline{VV}^{(jV)}(t))^T \qquad (86)$$

mit

$$\underline{VP}^{(jP)}(t) = (\Delta RNSWR^{(jP)}(t), \Delta RESWR^{(jP)}(t))^T \qquad (86a)$$

$$jP = 1,..,NP ;$$

$$\underline{V\theta}^{(j\theta)}(t) = (\Delta\theta SWR^{(j\theta)}(t), \Delta\theta_3(t))^T \qquad (86b)$$

$$j\theta = 1,..,N\theta ;$$

$$\underline{VV}^{(jV)}(t) = (\Delta VSWR^{(jV)}(t), \Delta V_2(t))^T \qquad (86c)$$

$$jV = 1,..,NV .$$

● Meß-(Stützungs-)Rauscheingangsmatrix (neu):

$$S(t) = S = (SP^{(jP)} \mid S\Theta^{(j\Theta)} \mid SV^{(jV)})^T \qquad (87)$$

mit

$$S_P^{(jP)} = \begin{bmatrix} 1 & 0 \\ 0 & 1 \end{bmatrix} \qquad (87a)$$

$$jP = 1,..,NP \;;$$

$$S_\theta^{(j\theta)} = (1 \; -1) \qquad (87b)$$

$$j\theta = 1,..,N\theta \;;$$

$$S_V^{(jV)} = (1 \; -1) \qquad (87c)$$

$$jV = 1,..,NV \;.$$

● Me<i>ß</i>-(Stützungs-)Fehlergleichung (analog Gl. (21)):

Die Zusammenfassung der Gl. (84) bis (87) und (16) ergibt:

$$\Delta \underline{Z}(t) = M \cdot \Delta \underline{X}(t) + \underline{V}(t) \qquad (88)$$

mit

$$\underline{V}(t) = S \cdot \underline{\overline{V}}(t) \text{ nach Gl. (86) und (87).}$$

● Me<i>ß</i>-(Stützungs-)Rauschmatrix (antatt Gl. (26)):

Durch Verwendung der Gl. (78) bis (80), (11) und (12) sowie (86) und (87) erhält man:

$$V(t) = E\{\underline{V}(t) \cdot \underline{V}^T(t)\} = S \cdot E\{\underline{\overline{V}}(t) \cdot \underline{\overline{V}}^T(t)\} \cdot S^T \qquad (89)$$

$$= S \cdot \overline{V}(t) \cdot S^T$$

mit

$$\overline{V}(t) = \overline{V} = \begin{bmatrix} V_P^{(jP)} & 0 & 0 \\ 0 & V_\theta^{(j\theta)} & 0 \\ 0 & 0 & V_V^{(jV)} \end{bmatrix} \qquad (90)$$

wobei

$$E\{\underline{V}(t)\} = S \cdot E\{\underline{\overline{V}}(t)\} = \underline{0}$$

und

$$V_P^{(jP)} = \begin{bmatrix} (\sigma_N^{(jP)})^2 & 0 \\ 0 & (\sigma_E^{(jP)})^2 \end{bmatrix} \qquad (90a)$$

$$jP = 1,..,NP \; ;$$

$$V_\Theta^{(j\Theta)} = \begin{bmatrix} (\sigma_{\Theta S}^{(j\Theta)})^2 & 0 \\ 0 & q_{\Theta 3}^2 \end{bmatrix} \qquad (90b)$$

$$j\Theta = 1,..,N\Theta \; ;$$

$$V_V^{(jV)} = \begin{bmatrix} (\sigma_{VS}^{(jV)})^2 & 0 \\ 0 & q_{V2}^2 \end{bmatrix} \qquad (90c)$$

$$jV = 1,..,NV \; .$$

Die Überführung der zeitkontinuierlichen System- und Meß-(Stützungs-) Fehler-(differential-)gleichungen nach Gl. (20) und (88) in zeitdiskrete Differenzengleichungen erfolgt auch beim quasi gleichzeitigen Vorhandensein von mehreren Navigationsdaten für Stützungen mittels Anwendung der Formalismen Gl. (28) bis (39). Auch hier wird vorausgesetzt, daß sämtliche Stützungen ausschließlich zu diskreten Zeitpunkten t = $T_i$; i = 1,2,3,... erfolgen. Damit geht die zeitkontinuierliche Meß-(Stützungs-)Fehlergleichung (88) über in

$$\Delta \underline{Z}_k = \begin{cases} M \cdot \Delta \underline{X}_k + \underline{V}_k & ; \quad k = k_i = \dfrac{T_i}{T_{KA}} \\ \underline{0} & ; \quad \text{sonst} \end{cases} \qquad (38)$$

mit

$$\begin{aligned} i &= 1,2,3,... \\ k &= 1,2,3,... \end{aligned} \Bigg\} \text{ nach Gl. (28)}$$

$$\underline{V}_k = S \cdot \overline{\underline{V}_k} \qquad \text{nach Gl. (88)}$$

$$M \quad : \text{nach Gl. (85)}$$

und für die zeitdiskrete Meß-(Stützungs-)Rauschmatrix gelten die Gl. (89) und (90).

Ebenso unbeeinflußt von quasi gleichzeitigen Mehrfachstützungen bleibt die zeitdiskrete Koppelrechnung nach Gl. (40) bzw. (41) mit den aktuellen Geschwindigkeits- und Kursinformationen von Geschwindigkeitsgeber und Richtungsmesser.

Zeitdiskrete Kalman-Filter-Algorithmen

Anstatt des bisher angewendeten zeitdiskreten Kalman-Filters mit simultaner Meß-(Stützungs-)Datenverarbeitung bietet sich hier - u. a. auch durch die damit mögliche Rechenzeitersparnis - der Algorithmus mit sequentieller Meß-(Stützungs-)Datenverarbeitung an.

Ausgehend von den rekursiven Prädiktions-(Extrapolations-)Gleichungen zur a priori-Systemfehlerabschätzung nach Gl. (42) bis (44) erhält man nun, abweichend von Gl. (45) bis (48), folgende Algorithmen für die Korrektur der a priori-Systemfehlerabschätzung durch die Messungen (Stützungen):

• Verstärkungsmatrizen $B_k^{(j)}$ zum Zeitpunkt $t_k = kT_{KA}$:

$$B_k^{(j)} = \begin{cases} P_k^{(j)} \cdot (M^{(j)})^T \cdot (VA_k^{(j)})^{-1} & ; \; k=k_i = \dfrac{T_i}{T_{KA}} \\[2em] 0 & ; \; \text{sonst} \end{cases} \qquad (91)$$

wobei

$$VA_k^{(j)} = M^{(j)} \cdot P_k^{(j)} \cdot (M^{(j)})^T + V^{(j)} \qquad (91a)$$

• A posteriori-Schätzfehler $\widehat{\Delta \underline{X}}_k^{(j+1)}$ zum Zeitpunkt $t_k = kT_{KA}$:

$$\widehat{\Delta \underline{X}}_k^{(j+1)} = \widehat{\Delta \underline{X}}_k^{(j)} + \begin{cases} B_k^{(j)} \cdot [\underline{Z}_k^{(j)} - M^{(j)} \cdot \widehat{\Delta \underline{X}}_k^{(j)}] ; \; k=k_i = \dfrac{T_i}{T_{KA}} \\[2em] \underline{0} & ; \; \text{sonst} \end{cases} \qquad (92)$$

• A posteriori-Schätzfehlerkovarianzmatrizen $P_k^{(j+1)}$ zum Zeitpunkt $t_k = kT_{KA}$:

$$P_k^{(j+1)} = \begin{cases} BM_k^{(j)} \cdot P_k^{(j)} \cdot (BM_k^{(j)})^T + B_k^{(j)} \cdot V^{(j)} \cdot (B_k^{(j)})^T & ; \; k=k_i = \dfrac{T_i}{T_{KA}} \\[2em] P_k^{(j)} & ; \; \text{sonst} \end{cases} \qquad (93)$$

mit

$$BM_k^{(j)} = (I - B_k^{(j)} M^{(j)}) \qquad (93a)$$

$$V^{(j)} = S^{(j)} \cdot \overline{V}^{(j)} \cdot (S^{(j)})^T \quad \text{nach Gl. (89)}$$

$$
\begin{aligned}
i &= 1,2,3\ldots, \\
k &= 1,2,3\ldots, \quad\Big\} \text{ nach Gl. (28)} \\
j &= (jP),\ (j\Theta),\ (jV) = 1,..,p, \\
jP &= 1,..,NP, \\
j\Theta &= 1,..,N\Theta, \\
jV &= 1,..,NV, \\
p &= (NP+N\Theta+NV), \\
M^{(j)} &: \text{ nach Gl. (85)}, \\
S^{(j)} &: \text{ nach Gl. (87)}, \\
\overline{V}^{(j)} &: \text{ nach Gl. (90)},
\end{aligned}
$$

$Z_k^{(j=jP)} = ZP_k^{(jP)} = (ZN_k^{(jP)},\ ZE_k^{(jP)})^T$ nach Gl. (72a) und (72b),

$\overline{Z}_k^{(j=j\theta)} = \overline{Z\theta}_k^{(j\theta)} = Z\theta_k^{(j\theta)}$ nach Gl. (73),

$\overline{Z}_k^{(j=jV)} = \overline{ZV}_k^{(jV)} = ZV_k^{(jV)}$ nach Gl. (74)

und den

● Randbedingungen:

$$
P_k^{(j=1)} = P_k^* \quad \text{nach Gl. (43)},
$$

$$
\widehat{\underline{\Delta X}}_k^{(j=1)} = \widehat{\underline{\Delta X}}_k^* \quad \text{nach Gl. (42)},
$$

$$
\widehat{\underline{\Delta X}}_k = \widehat{\underline{\Delta X}}_k^{(j=p+1)}, \tag{94}
$$

$$
P_k = \tfrac{1}{2} \cdot [P_k^{(j=p+1)} + (P_k^{(j=p+1)})^T]. \tag{95}
$$

Bei den modifizierten Algorithmen für das Korrigierte Navigationssystem ergeben sich aufgrund der Mehrfach-Stützungen folgende Änderungen bzw. Ergänzungen:
Abweichend von Gl. (53a) und (53b) gewinnt man hier analog der Vorgehensweise bei den Gl. (72a) bis (74) die korrigierten Zeitdiskreten Meß-(Stützungs-)Gleichungen.

● Korrigierte zeitdiskrete Positionsstützungsgleichungen:

$$
CZP_I^{(jP)} = (CZN_I^{(jP)},\ CZE_I^{(jP)})^T \tag{96}
$$

mit

$$CZN_1^{(jP)} = \begin{cases} RNS_1^{(jP)} - CRN_1^{FOA} & ; \ 1 = 1_i = \dfrac{T_i}{T_{KO}} = k_i q \\ 0 & ; \ \text{sonst} \end{cases} \quad (96a)$$

$$CZE_1^{(jP)} = \begin{cases} RES_1^{(jP)} - CRE_1^{FOA} & ; \ 1 = 1_i = \dfrac{T_i}{T_{KO}} = k_i q \\ 0 & ; \ \text{sonst} \end{cases} \quad (96b)$$

und

$$\left. \begin{array}{ll} jP & = 1,..,NP, \\ 1 & = 1,2,3,... \\ i & = 1,2,3,... \end{array} \right\} \ \text{nach Gl. (28)}$$

sowie

$$\left. \begin{array}{l} CZN_1^{(jP)} \\ CZE_1^{(jP)} \end{array} \right\} : \begin{array}{l} \text{jP-te Abweichungen zwischen korrigiertem Kop-} \\ \text{pelort und jP-ter Stützposition in Nord-(N-)} \\ \text{und Ost-(E-)Richtung zum Zeitpunkt } t_1 = 1 T_{KO}, \end{array}$$

$$\left. \begin{array}{l} CRN_1^{FOA} \\ CRE_1^{FOA} \end{array} \right\} : \text{nach Gl. (54a) und (54b) bzw. (55a) und (55b).}$$

● Korrigierte zeitdiskrete Kurswinkelstützungsgleichungen:

$$\underline{CZ\theta_1^{(j\theta)}} = CZ\theta_1^{(j\theta)} \quad (97)$$

mit

$$CZ\theta_1^{(j\theta)} = \begin{cases} \theta S_1^{(j\theta)} - C\theta_1 & ; \ 1 = 1_i = \dfrac{T_i}{TKO} = k_i q \\ 0 & ; \ \text{sonst} \end{cases} \quad (97a)$$

und

$$\left. \begin{array}{ll} j\theta & = 1,..,N\theta, \\ 1 & = 1,2,3,... \\ i & = 1,2,3,... \end{array} \right\} \ \text{nach Gl. (28)}$$

sowie

$CZ\theta_l^{(j\theta)}$ :  $j\theta$-te Differenz zwischen Korrigiertem Kurswinkelmeßsignal und $j\theta$-tem Kurswinkelstützungs-wert zum Zeitpunkt $t_l = lT_{KO}$,

$C\theta_l$ :  nach Gl. (51) .

• Korrigierte zeitdiskrete Geschwindigkeitsstützungsgleichungen:

$$\underline{CZV_l^{(jV)}} = CZV_l^{(jV)} \qquad (98)$$

mit

$$CZV_l^{(jV)} \quad = \begin{cases} VS_l^{(jV)} - CV_l & ; \quad l=l_i= \dfrac{T_i}{T_{KO}} = k_i q \\[4mm] 0 & ; \quad \text{sonst} \end{cases} \qquad (98a)$$

und

$$\begin{aligned} jV \quad &= 1,..,NV, \\ l \quad &= 1,2,3,... \\ i \quad &= 1,2,3,... \end{aligned} \Bigg\} \text{ nach Gl. (28)}$$

sowie

$CZV_l^{(jV)}$ :  $jV$-te Abweichung zwischen korrigiertem Geschwindigkeitsmeßsignal und $jV$-tem Geschwin-digkeitsstützungswert zum Zeitpunkt $t_l = lT_{KO}$,

$CV_l$ :  nach Gl. (49).

Die Koppelrechnung im Korrigierten Navigationssystem wird wieder entsprechend Gl. (54a) und (54b) bzw. Gl. (55a) und (55b) durchgeführt.

Nachfolgend werden die modifizierten zeitdiskreten Kalman-Filter-Algorithmen für das korrigierte Navigationssystem mit der hier sinnvollen sequentiellen Meß-(Stützungs-)Datenverarbeitung angegeben.

Basis dafür ist der rekursive Prädiktions-(Extrapolations-)Algorithmus zur a priori-Systemfehlerabschätzung nach Gl. (56) bis (58).

Als rekursive modifizierte Algorithmen für die Korrektur der a priori-Systemfehlerabschätzung durch die verschiedenen Messungen(Stützungen) werden jetzt anstatt der Gl. (59) bis (68) folgende Zusammenhänge gewonnen:

• Korrigierte Verstärkungsmatrizen $CB_k^{(j)}$ zum Zeitpunkt $t_k = kT_{KA}$:

$$CB_k^{(j)} = \begin{cases} CP_k^{(j)} \cdot (M^{(j)})^T \cdot (CVA_k^{(j)})^{-1} & ; \quad k=k_i= \dfrac{T_i}{T_{KA}} \\[4mm] 0 & ; \quad \text{sonst} \end{cases} \qquad (99)$$

wobei

$$CVA_k^{(j)} = M^{(j)} \cdot CP_k^{(j)} \cdot (M^{(j)})^T + V^{(j)} \qquad (99a)$$

- Korrigierte a posteriori-Schätzfehler $\hat{\underline{y}}_k^{(j+1)}$ zum Zeitpunkt $t_k = kT_{KA}$:

$$\hat{\underline{y}}_k^{(j+1)} = \hat{\underline{y}}_k^{(j)} + \begin{cases} CB_k^{(j)} \cdot [\underline{CZ}_k^{(j)} - M^{(j)} \cdot \hat{\underline{y}}_k^{(j)}] & ; \ k = k_i = \dfrac{T_i}{T_{KA}} \\[4mm] \underline{0} & ; \ \text{sonst} \end{cases} \quad (100)$$

- Korrigierte a posteriori-Schätzfehlerkovarianzmatrizen $CP_k^{(j+1)}$ zum Zeitpunkt $t = kT_{KA}$:

$$CP_k^{(j+1)} = \begin{cases} CBM_k^{(j)} \cdot CP_k^{(j)} \cdot (CBM_k^{(j)})^T + CB_k^{(j)} \cdot V^{(j)} \cdot (CB_k^{(j)})^T & ; k = k_i = \dfrac{T_i}{T_{KA}} \\[4mm] CP_k^{(j)} & ; \ \text{sonst} \end{cases}$$

$$(101)$$

mit

$$CBM_k^{(j)} = (I - CB_k^{(j)} \cdot M^{(j)}) \qquad\qquad (102)$$

$$V^{(j)} = S^{(j)} \cdot \overline{V}^{(j)} \cdot S^{(j)} \quad \text{nach Gl. (89)}$$

$$\begin{aligned} i &= 1,2,3,\ldots \\ k &= 1,2,3,\ldots \end{aligned} \Big\} \text{ nach Gl. (28),}$$

$$\begin{aligned} j &= (jP), (j\Theta), (jV) = 1,\ldots,p\,, \\ jP &= 1,\ldots,NP, \\ j\Theta &= 1,\ldots,N\Theta, \\ jV &= 1,\ldots,NV, \\ p &= (NP+N\Theta+NV), \end{aligned}$$

$$\begin{aligned} M^{(j)} &: \text{nach Gl. (85),} \\ S^{(j)} &: \text{nach Gl. (87),} \\ \overline{V}^{(j)} &: \text{nach Gl. (90),} \\ \underline{CZ}_k^{(j=jP)} &: \text{nach Gl. (96),} \\ \underline{CZ}_k^{(j=j\Theta)} &: \text{nach Gl. (97),} \\ \underline{CZ}_k^{(j=jV)} &: \text{nach Gl. (98)} \end{aligned}$$

und den

- Randbedingungen:

$CP_k^{(j=1)} = CP_k^*$ nach Gl. (56)

$\widehat{\underline{y}}_k^{(j=1)} = \underline{O}$ (103)

$CP_k = \frac{1}{2}[CP_k^{(j=p+1)} + (CP_k^{(j=p+1)})^T]$ (104)

$\underline{C}_k = \underline{C}_{k-1} + \widehat{\underline{y}}_k^{(j=p+1)}$ (105)

Dabei beschreibt nun Gl. (105) den Korrekturgrößenvektor zum Zeitpunkt $t_k = k \cdot T_{KA}$ mit den Definitionen nach Gl. (61) bis (63) sowie Gl. (65) und (66).

**Patentansprüche**

1. Navigationsverfahren für Fahrzeuge, insbesondere für Landfahrzeuge mit
   - einem Kursreferenzgerät, welches den Kurs eines Fahrzeugs in Bezug auf ein erdfestes Koordinatensystem anhand eines Kurssignals liefert
   - einem Sensor zur Erfassung der Fahrzeuglängsbewegung welcher ein der Fahrzeuglängsbewegung entsprechendes Signal erzeugt,
   - einem Positionsrechner, der mittels der vom Kursreferenzgerät und vom Sensor zur Erfassung der Fahrzeuglängsbewegung erzeugten Signale Positionsdaten des Fahrzeugs berechnet,
   - Anzeigemitteln zur Anzeige der ermittelten Fahrzeug-Navigationsdaten sowie
   - Eingabemitteln bzw. Empfangseinrichtungen zur Eingabe von zusätzlichen Positions- und/oder Kurs- und/oder Geschwindigkeits- bzw. Wegdaten für Navigationsdaten-Stützungen,
   dadurch gekennzeichnet,
   - daß den auf Plausibilität überprüften Signalen des Sensors für die Erfassung der Fahrzeuglängsbewegung (VM) und des Kursreferenzgerätes ($\theta$M) bekannte Werte (Erfahrungswerte DF(V), DF-($\theta$)) aufgeschaltet werden, die deren deterministische Fehleranteile kompensieren,
   - daß mittels eines modifizierten Kalman-Filters eine optimale Abschätzung der stochastischen Positions- und Richtungsfehler vorgenommen wird, die zur Berechnung von Richtungs- und Richtungsänderungskorrekturwerten (C($\theta$)) und (C($\epsilon$)) sowie Positionskorrekturen (C(RN)) und (C-(RE)) verwendet werden,
   - daß dem Signal ($\theta$M) des Kursreferenzgerätes zusätzlich die Richtungskorrekturen (C($\theta$)) aufgeschaltet und dem Positionsrechner die Positionskorrekturwerte (C(RN)) und (C(RE)) zur Korrektur der Positionsdaten zugeführt werden,
   - daß aus den erhaltenen korrigierten Fahrzeuglängsbewegungssignalen (CV) und den erhaltenen korrigierten-Richtungssignalen (C$\theta$) weiterhin korrigierte Komponentensignale in Nord- und Ostrichtung (CVN) und (CVE) gebildet werden, die dem Positionsrechner zugeführt werden,
   - daß die mittels der Positionsrechnung gebildeten korrigierten Standortkoordinaten in Nord- und Ostrichtung (CRN) und (CRE) mit Positionsstützungsdaten (RNS$^{(jP)}$),(RES$^{(jP)}$) in Nord- und Ostrichtung verglichen werden zur Bildung von Positions-Stützungssignalen in Nord- und Ostrichtung (CZN$^{(jP)}$) und (CZE$^{(jP)}$) die dem modifizierten Kalman-Filter zugeführt werden, wobei das modifizierte Kalman-Filter folgendes Fehlermodell für den Kurswinkelfehler nachbildet:

   $$\Delta \theta (t) = \Delta \theta 1 (t) + \Delta \theta 2 (t) + \Delta \theta 3 (t),$$

   wobei sich dieser additiv aus einem Anteil exponentiell (zeit-) korrelierten (farbigen) Rauschens $\Delta \theta_1(t)$, aus einem zeitlich linear veränderlichen Anteil $\Delta \theta_2(t)$ (Driftwinkel) mit unbekanntem Anfangswert $\Delta \theta_2(O)$ und unbekannter Steigung $\epsilon(t)$ (RANDOM RAMP Prozeß) sowie aus einem Anteil GAUSS'schen WEISSEN; d.h. (zeit-) unkorrelierten Rauschens $\Delta \theta_3(t)$ zusammensetzt und dabei sich der Fehleranteil $\Delta \theta_1(t)$ durch das mit WEISSEM Rauschen erregte Formfilter GAUSS-MARKOV-Prozeß 1. Ordnung beschreiben läßt sowie, daß die in den Stützungsdaten enthaltenen Fehler sich allein durch stationäre GAUSS'sche WEISSE, d.h. (zeit-) unkorrelierte Rauschen nachbilden lassen.

2. Navigationsverfahren nach Anspruch 1 dadurch gekennzeichnet, daß auch die verbesserten Signale des Kursreferenzgerätes (C$\theta$) und/oder des Sensors für die Erfassung der Fahrzeuglängsbewegung (CV) mit Kurs- und/oder Fahrzeuglängsbewegungs-Stützungsdaten ($\theta$S$^{(j\theta)}$) und/oder (VS$^{(jV)}$) verglichen werden zur Erzeugung von Kurs- und/oder Fahrzeuglängsbewegungs-Stützungsinformationen (CZ$\theta^{(j\theta)}$)

und/oder (CZV$^{(iV)}$),

- daß diese Stützungssignale dem modifizierten Kalman-Filter zugeführt werden, wobei das modifizierte Kalman-Filter wiederum folgendes Fehlermodell für den stochastischen Anteil des Kurswinkelfehlers nachbildet:

$$\Delta\,\theta\,(t)\ =\ \Delta\,\theta 1\,(t)\ +\ \Delta\,\theta 2\,(t)\ +\ \Delta\,\theta 3\,(t),$$

wobei sich dieser additiv aus einem Anteil exponentiell (zeit-) korrelierten (farbigen) Rauschens $\Delta\,\theta_1(t)$, aus einem zeitlich linear veränderlichen Anteil $\Delta\,\theta_2(t)$ (Driftwinkel) mit unbekanntem Anfangswert $\Delta\,\theta_2(O)$ und unbekannter Steigung $\epsilon$ (t) (RANDOM RAMP Prozess) sowie aus einem Anteil GAUSS'schen WEISSEN; d.h. (zeit-) unkorrelierten Rauschens $\Delta\,\theta_3(t)$ zusammensetzt und dabei sich der Fehleranteil $\Delta\,\theta_1(t)$ durch das mit WEISSEM Rauschen erregte Formfilter GAUSS-MARKOV-Prozess 1. Ordnung beschreiben läßt sowie, daß die in den Stützungsdaten enthaltenen Fehler sich allein durch stationäre GAUSS'sche WEISSE, d.h. (zeit-) unkorrelierte Rauschen nachbilden lassen.

3. Navigationsverfahren nach Anspruch 1 oder 2, dadurch gekennzeichnet, daß das modifizierte Kalman Filter auch zur optimalen Abschätzung der stochastischen Fahrzeuglängsbewegungsfehleranteile vorgesehen ist, wobei das modifizierte Kalman-Filter folgendes Fehlermodell für den Fahrzeuglängsbewegungsfehler nachbildet:

$$\Delta\,V\,(t)\ =\ \Delta\,V_1\,(t)\ +\ \Delta\,V_2\,(t)$$

wobei sich dieser additiv aus einem Anteil exponentiell (zeit-) korreliertem farbigen Rauschens $\Delta\,V_1$ (t) sowie einem Anteil GAUSS'schen WEISSEN, d.h. (zeit-)unkorrelierten Rauschens $\Delta\,V_2$ (t) zusammensetzt und dabei sich der Fehleranteil $\Delta\,\theta_1(t)$ durch das mit WEISSEM Rauschen erregte Formfilter GAUSS-MARKOV-Prozess 1. Ordnung beschreiben läßt und der nach Kalman-Filterung berechnete Korrekturwert (C(V)) dem Signal des Sensors für die Erfassung der Fahrzeuglängsbewegung zusätzlich aufgeschaltet wird.

## Claims

1. A method of navigation for vehicles, especially land vehicles with
   - a course reference device, which provides the course of a vehicle with reference to an earthbound co-ordinates system with the aid of a course signal
   - a sensor to detect the longitudinal movement of the vehicle which produces a signal corresponding to the longitudinal movement of the vehicle,
   - a position calculator which calculates position data of the vehicle by means of the signals produced by the course reference device and sensor for detecting the longitudinal movement of the vehicle,
   - indicator means to indicate the vehicle navigation data determined and
   - input means and/or receiving devices for input of additional position and/or course and/or speed and/or path data for navigation support data plotting,

   **characterised in that,**
   - known values (empirical values DF(V), DF($\theta$)) are superimposed on the signals, checked for plausibility, from the sensor for detecting vechicle longitudinal movement (VM) and the course reference device ($\theta$M), which compensate for their deterministic error components,
   - by means of a modified Kalman Filter, an optimal evaluation of the stochastic position and direction errors is undertaken, which are used to calculate the direction and direction alteration correction values (C($\theta$) ) and (C($\epsilon$) ) and position corrections (C(RN) ) and (C(RE) ),
   - in addition, the direction corrections (C($\theta$) ) are superimposed on the signal ($\theta$M) from the course reference device and the position correction values (C(RN) ) and (C(RE) ) are supplied to the position calculator to correct the position data,
   - further corrected component signals are formed in a North and East direction (CVN) and (CVE) from the corrected vehicle longitudinal direction signals (CV) received and the corrected direction signals (C$\theta$) received, which are supplied to the position calculator,
   - the corrected position co-ordinates formed by means of the position calculation in North and East direction (CRN) and (CRE) are compared with position support data (RNS$^{(jP)}$), (RES$^{(jP)}$) in North and East direction to form support position signals in North and East direction (CZN$^{jP)}$) and (CZE$^{(jP)}$), which are supplied to the modified Kalman Filter, the modified Kalman Filter simulating the following error model for the course angle error:

$$\Delta \theta (t) = \Delta \theta 1 (t) + \Delta \theta 2 (t) + \Delta 03 (t),$$

this being composed cumulatively from a component of exponentially (time)-correlated (coloured) noise $\Delta \theta_1(t)$, from a component $\Delta \theta_2(t)$ (angle of drift) varying linearly in time with unknown start value $\Delta \theta_2 (O)$ and unknown gradient $\epsilon (t)$ (RANDOM RAMP Process) and from a component of GAUSSIANWHITE; i.e. (time)- uncorrelated noise $\Delta \theta_3(t)$ and the errorcomponent $\Delta \theta_1(t)$ being described by the form filter GAUSS-MARKOVProcess 1st order excited by WHITE noise and the errors contained in the support data can be simulated alone by stationary GAUSSIAN WHITE i.e. (time)-uncorrelated noise.

2.  A method of navigation process according to Claim 1 characterised in that the corrected signals from the course reference device (C$\theta$) and/or from the sensor for detection of vehicle longitudinal movement (CV) are also compared with course and/or vehicle longitudinal movement support data ($\theta$S$^{(j\theta)}$) and/or (VS$^{(jV)}$) to produce course and/or vehicle longitudinal movement support information (CZ$\theta^{(j\theta)}$) and/or (CZV$^{(jV)}$),
    - that these support signals are supplied to the modified Kalman filter, the modified Kalman filter again simulating the following error model for the stochastic component of the course angle error:

$$\Delta \theta(t) = \Delta \theta 1 (t) + \Delta \theta 2 (t) + \Delta \theta 3 (t),$$

where this is composed cumulatively from a component of exponentially (time)-correlated (coloured) noise $\Delta \theta_1 (t)$, from a component $\Delta \theta_2(t)$ (angle of drift) varying linearly in time with unknown start value $\Delta \theta_2 (O)$ and unknown gradient $\epsilon(t)$ (RANDOM RAMP Process) and from a component of GAUSSIAN WHITE; i.e. (time)- uncorrelated noise $\Delta \theta_3(t)$ and the error component $\Delta \theta_1(t)$ being described by the form filter GAUSS-MARKOV Process 1st order excited by WHITE noise, and the errors contained in the support data can be simulated alone by stationary GAUSSIAN WHITE i.e. (time)-uncorrelated noise.

3.  A method of navigation process according to Claim 1 or 2, characterised in that the modified Kalman filter is also provided for optimal estimation of the stochastic vehicle longitudinal error components, in which the modified Kalman filter simultaes the following error model for the vehicle longitudinal movement error:

$$\Delta V (t) = \Delta V_1 (t) + \Delta V_2 (t)$$

in which this is composed cumulatively from a component of exponentially (time)-correlated coloured noise $\Delta V_1(t)$, from a component of GAUSSIAN WHITE; i.e. (time)-uncorrelated noise $\Delta V_2(t)$ and the error component $\Delta \theta_1(t)$ being described by the form filter GAUSS-MARKOV Process 1st order excited by WHITE noise, and the correction value (C(V)) calculated according to the Kalman filter is additionally superimposed on the signal from the sensor for detecting vehicle longitudinal movement.

**Revendications**

1.  Procédé de navigation pour des véhicules, notamment des véhicules terrestres, comportant
    - un dispositif indiquant une trajectoire de référence, qui fournit la trajectoire d'un véhicule par rapport à un système de coordonnées fixe par rapport à la terre, en fonction d'un signal de trajectoire,
    - un capteur pour détecter le déplacement longitudinal du véhicule et qui produit un signal correspondant au déplacement longitudinal du véhicule,
    - un calculateur de position, qui, au moyen des signaux produits par le dispositif indiquant une trajectoire de référence et par le capteur de détection de déplacement longitudinal, calcule des données de position du véhicule,
    - des moyens d'affichage pour afficher les données de navigation du véhicule obtenues, ainsi que

- des moyens d'entrée ou des dispositifs de réception servant à introduire des données supplémentaires de position et/ou de trajectoire et/ou de vitesse ou de trajet parcouru pour les assistances de données du véhicule,

caractérisé par le fait

- qu'aux signaux, dont la vraisemblance est contrôlée, du capteur servant à détecter le déplacement longitudinal (VM) du véhicule, et du dispositif ($\theta$M) indiquant une référence de trajectoire, on ajoute des valeurs connues (valeurs expérimentales DF(V), DF($\theta$)), qui compensent leurs composantes d'erreurs déterministes,
- qu'on réalise, à l'aide d'un filtre de Kalman modifié, une estimation optimale des erreurs aléatoires de position et de direction, que l'on utilise pour calculer des valeurs (C($\theta$)) et (C($\epsilon$)) de correction de direction et de modification de direction ainsi que des modifications de correction (C(RN)) et (C(RE)),
- qu'on ajoute en outre au signal ($\theta$M) du dispositif indiquant la référence de trajectoire les corrections de direction (C($\theta$)) et qu'on envoie au calculateur de position les valeurs de correction de position (C(RN)) et (C(RE)) pour corriger les données de position,
- qu'à partir des signaux corrigés obtenus (CV) du déplacement longitudinal du véhicule, et des signaux de direction (C$\theta$) corrigés obtenus, on forme en outre des signaux corrigés de composantes dans la direction du nord et de l'est (CVN) et (CVE) qui sont envoyées au calculateur de position,
- que l'on compare les coordonnées corrigées de lieu, formées au moyen du calcul de position, dans la direction du nord (CRN) et dans la direction de l'est (CRE) à des données d'assistance de position (RNS$^{(jP)}$), (RES$^{(jP)}$) dans la direction du nord et dans la direction du sud pour former des signaux d'assistance de position dans la direction du nord et dans la direction de l'est (CZN$^{(jP)}$) et (CZE$^{(jP)}$), qui sont envoyés au filtre de Kalman modifié, les filtres de Kalman modifiés simulant le modèle d'erreur suivant pour l'erreur angulaire de trajectoire

$$\Delta\theta(t) = \Delta\theta1(t) + \Delta\theta2(t) + \Delta\theta3(t),$$

cette erreur étant formée par la somme d'une composante de bruit (colorée) $\Delta\theta_1(t)$ corrélée de façon exponentielle (dans le temps), d'une composante $\Delta\theta_2(t)$ variable linéairement dans le temps (angle de dérive) avec une valeur initiale $\Delta\theta_2(O)$ inconnue et une pente inconnue $\epsilon(t)$ (procédé RANDOM RAMP) ainsi que d'une composante de BRUIT BLANC GAUSSIEN, c'est-à-dire le bruit $\Delta\theta_3(t)$ non corrélé (dans le temps),, et la composante d'erreur $\Delta\theta_1(t)$ pouvant être décrite au moyen du filtre de forme, excité par le BRUIT BLANC, du processus de GAUSS-MARKOV du 1-er ordre, et les erreurs contenues dans les données d'assistance pouvant être simuler uniquement au moyen du BRUIT BLANC GAUSSIEN stationnaire, c'est-à-dire du bruit non corrélé (dans le temps).

**2.** Procédé de navigation selon la revendication 1, caractérisé en ce que l'on compare également les signaux améliorés du dispositif (C$\theta$) indiquant la référence de trajectoire et/ou du capteur servant à détecter le déplacement longitudinal (CV) du véhicule à des données d'assistance de trajectoire et/ou de déplacement longitudinal du véhicule ($\theta$S$^{(j\theta)}$) et/ou (VS$^{(jV)}$) pour la production d'informations d'assistance de trajectoire et/ou de déplacement longitudinal du véhicule (CZ$\theta^{(j\theta)}$) et/ou (CZV$^{(jV)}$),

- qu'on envoie ces signaux d'assistance au filtre de Kalman modifié, le filtre de Kalman modifié simulant à son tour le modèle d'erreur suivant pour la composante aléatoire de l'erreur angulaire de trajectoire :

$$\Delta\theta(t) = \Delta\theta1(t) + \Delta\theta2(t) + \Delta\theta3(t),$$

cette erreur étant formée par la somme d'une composante de bruit (colorée) $\Delta\theta_1(t)$ corrélée de façon exponentielle (dans le temps), d'une composante $\Delta\theta_2(t)$ variable linéairement dans le temps (angle de dérive) avec une valeur initiale $\Delta\theta_2(O)$ inconnue et une pente inconnue $\epsilon(t)$ (procédé RANDOM RAMP) ainsi que d'une composante de BRUIT BLANC GAUSSIEN, c'est-à-dire le bruit $\Delta\theta_3(t)$ non corrélé (dans le temps), et la composante d'erreur $\Delta\theta_1(t)$ pouvant être décrite au moyen du filtre de forme, excité par le BRUIT BLANC, du processus de GAUSS-MARKOV du 1-er ordre, et les erreurs contenues dans les données d'assistance pouvant être simulées uniquement au moyen du BRUIT BLANC GAUSSIEN stationnaire, c'est-à-dire du bruit non corrélé (dans le temps).

3. Procédé de navigation selon la revendication 1 ou 2, caractérisé en ce que le filtre de Kalman modifié est également prévu pour l'estimation optimale des composantes aléatoires d'erreur de déplacement longitudinal du véhicule, le filtre de Kalman modifié stimulant le modèle d'erreur suivant pour l'erreur de déplacement longitudinal du véhicule :

$$\Delta V(t) = \Delta V_1(t) + \Delta V_2(t),$$

cette erreur étant formée par la somme d'une composante de bruit coloré $\Delta V_1(t)$ corrélée de façon exponentielle (dans le temps) ainsi qu'une composante de BRUIT GAUSSIEN, c'est--à-dire d'un bruit non corrélé (dans le temps) $\Delta V_2(t)$, et la composante d'erreur $\Delta V_1(t)$ pouvant être décrite par le filtre de forme, excité par le BRUIT BLANC, du processus de GAUSS-MARKOV du 1-er ordre, et la valeur de correction (C(V)) calculée en aval du filtre Kalman étant ajoutée en supplément au signal du capteur servant à détecter le déplacement longitudinal du véhicule.

FIG.1

FIG.2

FIG.3

FIG. 4